# EUROPÄISCHE PATENTSCHRIFT

(11) **EP 3 388 200 B1**
(45) Veröffentlichungstag und Bekanntmachung des Hinweises auf die Patenterteilung: **20.01.2021**
(21) Anmeldenummer: 18166933.4
(22) Anmeldetag: 12.04.2018
(51) Int. Cl.: B25B 27/22, B62D 55/32

(54) **KETTENINSTANDSETZUNGSVORRICHTUNG**
CHAIN REPAIRING DEVICE
DISPOSITIF DE REMISE EN ÉTAT DE CHAÎNES

(30) Priorität: 13.04.2017 DE 202017102228 U
(43) Veröffentlichungstag der Anmeldung: 17.10.2018
(73) Patentinhaber: MWK DEFENCE GmbH, 02699 Königswartha (DE)
(72) Erfinder: Kluge, Philipp, 02894 Sohland am Rotstein (DE); Balting, Torsten, 02699 Königswartha (DE); Niemtschke, Gunter, 01904 Neukirch (DE); Exler, Steffen, 02699 Neschwitz (DE)
(74) Vertreter: Sperling, Thomas

(56) Entgegenhaltungen:
- EP-A1- 2 957 487
- GB-A- 779 523
- US-A- 4 167 058

## Beschreibung

Die Erfindung betrifft eine Ketteninstandsetzungsvorrichtung zur Bearbeitung von Gleisketten.

Gleisketten sind ein elementarer Bestandteil des Fahrwerks eines Kettenfahrzeugs und werden zum Antrieb sowie zur Lenkung eines solchen verwendet. Sie sind modular aus vielen identischen Kettengliedern aufgebaut, wobei nebeneinander angeordnete Kettenglieder durch innere und äußere Kettenverbinder verbunden sind. Im geschlossenen Zustand bilden Gleisketten ein umlaufendes Band, welches durch in die Zwischenräume zwischen den einzelnen Kettengliedern eingreifende, rotierende Triebräder angetrieben wird.

Da sich aufgrund der großen Auflagefläche der Gleiskette der Bodendruck verringert, wird ein Einsinken des Fahrzeugs speziell in weiche Böden verhindert. Zum Schutz von Straßenbelägen können Gleisketten zudem Kettenpolster auf den einzelnen Kettengliedern aufweisen. Eine weitere charakteristische Eigenschaft von Gleisketten ist ihre hohe Traktion, welche ein Abgleiten am Berg verhindert, sodass Gleisketten zur Anwendung an Fahrzeugen oder Maschinen für die Arbeit in Hanglagen geeignet sind. Weitere Anwendungsmöglichkeiten ergeben sich bei Planierraupen auf Baustellen oder bei Pistenraupen zur Präparation von Skipisten. Gleisketten besonders großer Dimension werden auch im Bergbau für Förderbrücken verwendet.

Nach längerem Gebrauch sind die Gleisketten der Kettenfahrzeuge von starkem Verschleiß betroffen. An den Gleisketten befindliche Kettenpolster verlieren an Dicke und die Metallteile weisen Verformungen oder Roststellen auf. Dementsprechend ist eine Instandsetzung solcher Gleisketten notwendig.

Aufgrund ihrer Eigenschaften werden Gleisketten vorzugsweise für große und schwere Fahrzeuge und Maschinen verwendet. Somit weisen auch die geeigneten Gleisketten große Abmessungen sowie ein hohes Gewicht auf. Durch die enormen Abmessungen einer Gleiskette ist eine Instandsetzung einer solchen mit erheblichem Aufwand verbunden. Dabei wird die Gleiskette üblicherweise mit handgeführten Werkzeugen auseinandergebaut und in einzelne Glieder zerlegt, um ein Austauschen der einzelnen Bestandteile, wie beispielsweise der Kettenpolster, zu ermöglichen. Nachteilig ist, dass sowohl das Zerlegen der Gleiskette als auch das anschließende Zusammensetzen der einzelnen Gleiskettenelemente und die folgende Montage der Gleiskette an das Kettenfahrzeug viel Zeit in Anspruch nimmt und einen hohen Kraftaufwand erfordert.

Im Stand der Technik ist in der DE 80 25 249 U1 eine Vorrichtung zum Ausziehen von Kettenpolstern aus Gleisketten beschrieben. Dabei wird die Ausziehvorrichtung, welche über zwei verbundene und über eine Spindel zueinander bewegliche Klauen verfügt, von zwei Seiten an den Kettenpolstern der Gleiskette positioniert, wobei eine der Klauen einen Dorn zum Entriegeln des Kettenpolsters aufweist. Durch ein Betreiben der Spindel wird erst mittels des Dorns das Kettenpolster entriegelt und bei weiterem Drehen an der Spindel wird das Kettenpolster von der Gleiskette gezogen. Die Ausziehvorrichtung kann beispielsweise mit einem Schlagschrauber angetrieben werden.

Ein Problem bei der Montage der Gleiskette an das Kettenfahrzeug wird durch die Vorspannung der Gleiskette hervorgerufen. Eine auf dem Boden ausgebreitete Gleiskette richtet sich an den Endbereichen ein gewisses Stück auf, was die Kettenmontage erschwert. Durch das hohe Gewicht sind auch große Kräfte notwendig, um die gegebene Vorspannung zu überwinden.

Aus dem Stand der Technik ist eine Montierhilfe für eine Raupenkette bekannt, die in der DE 601 01 513 T2 beschrieben ist. Die Montierhilfe unterstützt die Montage einer einsatzbereiten Gleiskette, indem sie das Ende der Gleiskette nach unten drückt, sodass ein Einfahren des Kettenfahrzeugs möglich ist.

Ein großes Problem stellt jedoch immer noch das Handling einer schweren Gleiskette mit großen Abmessungen dar, weshalb ein zeit- und personalaufwändiges Zerlegen der Gleiskette unabdingbar ist.

Aus der GB 779,523 ist ebenfalls eine Ketteninstandsetzungsvorrichtung bekannt. Bei dieser Vorrichtung muss die Kette aufwendig in die Bearbeitungsposition verbracht werden.

Die Aufgabe der Erfindung besteht darin eine Vorrichtung zur Verfügung zu stellen, mit der eine effiziente und wirtschaftliche Instandsetzung von großen und schweren Gleisketten realisiert werden kann.

Die Aufgabe wird durch einen Gegenstand mit den Merkmalen gemäß Patentanspruch 1 gelöst. Weiterbildungen sind in den abhängigen Patentansprüchen angegeben.

Insbesondere wird die Aufgabe durch eine erfindungsgemäße Ketteninstandsetzungsvorrichtung gelöst, welche zur Bearbeitung von Gleisketten geeignet ist. Die Ketteninstandsetzungsvorrichtung umfasst eine passive obere Rollenbahn und eine darunter angeordnete passive untere Rollenbahn sowie eine erste Umlenkeinrichtung zur Umlenkung der Gleiskette von der unteren Rollenbahn auf die obere Rollenbahn und umgekehrt mit einer zugeordneten Antriebseinheit und eine zweite Umlenkeinrichtung zur Umlenkung der Gleiskette von der oberen Rollenbahn auf die untere Rollenbahn und umgekehrt mit einer zugeordneten Antriebseinheit. Des Weiteren umfasst die Ketteninstandsetzungsvorrichtung einen die untere Rollenbahn erweiternden Aufgabe- und Abgabebereich für die Gleiskette mit einer zugeordneten Antriebseinheit. Die obere und die untere Rollenbahn bilden mit den Umlenkeinrichtungen einen Gleiskettenbeförderungskreislauf und es ist wenigstens ein Arbeitsplatz zur Montage und Demontage von Bestandteilen der Gleiskette innerhalb dieses Gleiskettenbeförderungskreislaufs angeordnet. Der die untere Rollenbahn erweiternde Aufgabe- und Abgabebereich ist zu einer Seite hin offen ausgebildet, sodass ein Zuführen der Gleiskette in den Gleiskettenbeförderungskreislauf möglich ist. Dieser Bereich wird auch als Zuführbereich bezeichnet. Außerdem kann die Gleiskette über die offene Seite des Aufgabe- und Abgabebereiches aus dem Gleiskettenbeförderungskreislauf herausgeführt werden.

Nach dem Konzept der Erfindung wird die Gleiskette innerhalb des Gleiskettenbeförderungskreislaufs durch die aktiven Antriebseinheiten beliebig auf der passiven Rollenbahn verschoben, sodass eine Bearbeitung der verschiedenen Gleiskettenelemente inklusive der Demontage und erneuten Montage einzelner Elemente der Gleiskette an den an der Rollenbahn angeordneten Arbeitsplätzen durchgeführt werden kann, wobei jeder Abschnitt der Gleiskette zu allen Arbeitsplätzen geführt werden kann.

Ein Gleiskettenbeförderungskreislauf ist im Sinne der Erfindung eine geschlossene Bahn, auf der die Gleiskette derart befördert werden kann, dass sie bei einer Beförderung ohne Richtungsänderung immer wieder dieselben Punkte passiert, sich also nach einem Umlauf wieder an derselben Stelle des Kreislaufes befindet. Dieser Gleiskettenbeförderungskreislauf wird aus der oberen und der unteren Rollenbahn sowie den beiden Umlenkeinrichtungen gebildet. Hierbei ist eine Rollenbahn eine passive Beförderungseinrichtung, die reibungsreduzierend, zum Beispiel durch drehbar gelagerte Rollen, einen Transport eines Gegenstandes, wie einer Gleiskette, durch aktive Antriebseinheiten unterstützt beziehungsweise ermöglicht.

Die Gleiskette liegt nach dem Passieren einer ersten Umlenkeinrichtung auf der oberen Rollenbahn um 180° gedreht auf im Vergleich zur Lage der Gleiskette auf der unteren Rollenbahn. Die Oberseite der Gleiskette wird dementsprechend zur Unterseite der Gleiskette bei einem Wechsel der Gleiskette von der unteren zur oberen Rollenbahn. Dadurch sind die Elemente, die auf der unteren Rollenbahn am unteren Rand der Gleiskette platziert sind auf der oberen Rollenbahn am oberen Rand der Gleiskette positioniert.

In einer bevorzugten Variante ist die zweite Umlenkeinrichtung zwischen zwei Modi umschaltbar, sodass entweder in einer Null-Stellung die Gleiskette unter der zweiten Umlenkeinrichtung hindurch geführt werden kann oder in einer Umlauf-Stellung, welche auch als Umlauf-Modus bezeichnet werden kann, die Gleiskette entlang eines an der Umlenkeinrichtung angeordneten Schwenkarms von der oberen zur unteren Rollenbahn oder vice versa wechseln kann. Dabei ist der Schwenkarm in einer vorteilhaften Ausgestaltung drehbar um eine Schwenkachse gelagert.

Der Schwerpunkt des Schwenkarms ist dabei vorzugsweise derart ausbalanciert, dass der Schwenkarm durch das Gewicht der Gleiskette zum Wechsel zwischen den beiden Modi reversibel selbsttätig klappbar ausgebildet ist. Der Schwenkarm und somit die Umlenkeinrichtung wechselt also zwischen der Null-Stellung zum Ein- und Ausfahren der Gleiskette und der Umlauf-Stellung zum Wechsel der Gleiskette zwischen oberer und unterer Rollenbahn. Bei einem Einschieben der Gleiskette in die zweite Umlaufeinrichtung führt die Gewichtskraft der Gleiskette also zu einem Klappen des Schwenkarms nach unten, wobei der Schwenkarm ohne den Einfluss der Gewichtskraft, also nachdem die Gleiskette wieder zurück auf die obere Rollenbahn geschoben wurde, wieder zurück klappt. Der Prozess des Zurückklappens des Schwenkarms in die Null-Stellung für den Fall, dass das Gewicht der Gleiskette nicht mehr auf den Schwenkarm einwirkt, wird bevorzugt durch die Federkraft einer am Schwenkarm befestigten Zugfeder unterstützt.

Vorzugsweise können mehrere Arbeitsplätze zur Bearbeitung der Gleiskette von unterschiedlichen Seiten an der Beförderungseinrichtung angeordnet sein. Die unterschiedlichen Seiten sind dabei bevorzugt die Ober- und die Unterseite der Gleiskette, zusätzlich ist eine solche Gleiskette mittels der Ketteninstandsetzungsvorrichtung aber auch von beiden Längsseiten aus bearbeitbar.

In einer vorteilhaften Ausgestaltung der Ketteninstandsetzungsvorrichtung ist die aktive Antriebseinheit derart ausgebildet, dass sie eine Ritzeltrommel mit darauf angeordneten Antriebsrädern aufweist. Bevorzugt sind auf der Ritzeltrommel innerhalb der aktiven Antriebseinheit jeweils zwei identische Antriebsräder beabstandet angeordnet. Die zwei identischen Antriebsräder sind derart in die Gleiskette eingreifbar ausgebildet, dass bei einem Eingriff der Antriebsräder in die Gleiskette eine Rotation der Antriebsräder ein Verschieben der Gleiskette bewirkt. Dabei ist das Paar Zahnräder symmetrisch zur Mitte auf dem Ritzel angeordnet, sodass die zwei Zahnräder denselben Abstand zur Symmetrieebene des Ritzels haben, wobei die hier beschriebene Symmetrieebene senkrecht zur Ritzelachse ausgerichtet ist. Besonders bevorzugt sind auf der Antriebseinheit mehrere unterschiedlich große Paare von Antriebsrädern symmetrisch zur Mitte der Ritzeltrommel voneinander beabstandet auf der Ritzeltrommel angeordnet, wobei der Durchmesser der Antriebsräder von innen nach außen zunimmt.

Vorteilhaft ist die Ketteninstandsetzungsvorrichtung universell für verschiedene Gleiskettenarten geeignet, da die Antriebseinheiten an unterschiedliche Arten von Gleisketten anpassbar sind. Es sind vorzugsweise mehrere unterschiedlich große Paare von Antriebsrädern in einer Antriebseinheit montiert, sodass ein Wechsel zwischen verschiedenen Gleisketten auch ohne eine erneute Montage von Antriebsrädern möglich ist. Die Zahngeometrie und die Zahnfußgeometrie der Antriebsräder sind den äußeren Kettenverbindern der jeweiligen Gleiskette angepasst. Der Fußkreisdurchmesser der kleineren, innen liegenden Antriebsräder hat in einer Variante mindestens eine Größe, die dem Trommeldurchmesser plus zweimal der Kettenzapfenhöhe entspricht, um den Zahneingriff der innen liegenden Antriebsräder zu ermöglichen und somit die Funktionstüchtigkeit der inneren Antriebsräder gewährleisten zu können. Die Durchmesser der Antriebsräder sind in Abhängigkeit von der Teilung der jeweiligen Gleiskette vorzugsweise so gewählt, dass der Kopfkreisdurchmesser der kleineren, innen liegenden Antriebsräder kleiner oder gleich des Fußkreisdurchmessers der größeren, außen liegenden Antriebsräder ist. Der Abstand der Antriebsräder zueinander ist den Breiten der jeweiligen Gleisketten so angepasst, dass die Zähne der Antriebsräder zwischen die äußeren Kettenverbinder greifen können. Der Abstand der äußeren Antriebsräder zueinander beträgt vorteilhaft mindestens die Breite der schmaleren Gleiskette plus ausreichend Spiel von etwa 30 mm. Die Antriebsräder sind symmetrisch zur Mitte der Ritzeltrommel ausgerichtet. Die absolute Breite der Rollenbahn unterhalb der Antriebseinheiten inklusive dem Schraubenkopf ist bevorzugt derart gestaltet, dass sie kleiner ist als der Abstand der größeren, außen liegenden Antriebsräder. Dadurch ist ein Versenken der äußeren Antriebsräder neben der Rollenbahn bei einem Antrieb einer schmalen Gleiskette durch die innen liegenden Antriebsräder möglich.

Die Ritzeltrommeln der Antriebseinheiten und somit auch die darauf angeordneten Antriebsräder sind zur Anpassung an unterschiedliche Gleiskettentypen höhenverstellbar ausgebildet, sodass die Höhe für die jeweiligen Gleiskettenbreiten eingestellt werden kann. Außerdem ermöglicht die Höhenverstellung eine Anpassung an den jeweiligen Verschleißgrad der Kettenpolster und die daraus resultierende unterschiedliche verbleibende Dicke der Kettenpolster. Die Einstellung der Höhe der Ritzeltrommel wird in einer besonderen Variante mittels eines an den Antriebseinheiten angeordneten Handrades realisiert.

Die Antriebsräder der Antriebseinheiten der Ketteninstandsetzungsvorrichtung sind in einer speziellen Ausgestaltung zweigeteilt und können somit problemlos und schnell ausgewechselt werden, ohne dass die gesamte Antriebseinheit demontiert werden muss.

In einer vorteilhaften Ausführung werden die Antriebsräder der Antriebseinheit, die dem Aufgabe- und Abgabebereich zugeordnet ist, mittels eines Getriebemotors und eines Kettenrades über eine Rollenkette angetrieben.

Die Ritzeltrommeln der Antriebseinheiten, die den Umlenkeinrichtungen zugeordnet sind, weisen vorzugsweise Trommelmotoren auf. Diese Ritzeltrommeln der den Umlenkeinrichtungen zugeordneten Antriebseinheiten sind bevorzugt derart höhenverstellbar ausgebildet, dass die auf der Ritzeltrommel angeordneten Antriebsräder in einer oberen Position von unten in die auf der oberen Rollenbahn positionierte Gleiskette und in einer unteren Position von oben in die auf der unteren Rollenbahn positionierte Gleiskette eingreifen können. Zwei Antriebseinheiten sind somit in der Lage die Gleiskette von vier Punkten des Gleiskettenbeförderungskreislaufs aus zu befördern, da sie an vier unterschiedlichen Punkten in die Gleiskette eingreifen können. Hierbei wird der Abstand der oberen Rollenbahn inklusive dem Schraubenkopf vorteilhaft derart gewählt, dass er kleiner ist als der absolute Abstand der Flanschbleche der Trommel auch inklusive des Schraubenkopfes, wobei außerdem ausreichend Spiel zu berücksichtigen ist. Die Horizontalträger der Ritzeltrommelaufnahmen müssen einen ausreichenden Abstand zur Ritzeltrommel haben, sodass der Abstand zwischen der Unterseite des Horizontalträgers und den Rollen der oberen Rollenbahn, in der untersten Stellung der Antriebstrommel, mindestens der Höhe der Gleiskette plus ausreichend Spiel beziehungsweise Freiraum entspricht.

Bevorzugt sind die Antriebsräder der Antriebseinheiten der Ketteninstandsetzungsvorrichtung in zwei entgegengesetzte Richtungen rotierbar ausgebildet. Dabei wird bewirkt, dass eine Rotation der Antriebsräder der den Umlenkeinrichtungen zugeordneten Antriebseinheiten in eine erste Richtung auch die Gleiskette innerhalb des Gleiskettenbeförderungsreislaufs in eine erste Richtung befördern. Bei Rotation dieser Antriebsräder in eine zweite, der ersten entgegengesetzten Richtung wird somit auch die Gleiskette in eine der ersten Richtung entgegengesetzte Richtung befördert.
Bei der dem Aufgabe- und Abgabebereich zugeordneten Antriebseinheit befördern die Antriebsräder die Gleiskette bei Rotation in eine erste Richtung in die Ketteninstandsetzungsvorrichtung hinein und bei Rotation in die entgegengesetzte Richtung aus der Ketteninstandsetzungsvorrichtung heraus. In einer Ausgestaltung der Ketteninstandsetzungsvorrichtung weist diese einen Arbeitsplatz auf, an dem ein Schubfach derart in die Rollenbahn integriert ist, dass ein sich von der Gleiskette lösendes Element der Gleiskette vom Schubfach aufgenommen werden kann. Mittels des Schubfaches kann es dann unter der Gleiskette hervor gezogen werden. Vorzugsweise ist dieser Arbeitsplatz an der unteren Rollenbahn angeordnet und kann dann zur Demontage der inneren Kettenverbinder verwendet werden. Dabei wird die Kontermutter der inneren Kettenverbinder gelöst und entfernt, sodass der oben aufliegende Teil des inneren Kettenverbinders entnommen werden kann und der untere Teil des inneren Kettenverbinders in das Schubfach fällt.

An der Ketteninstandsetzungsvorrichtung ist in einer bevorzugten Variante an einem Arbeitsplatz ein motorbetriebenes Abziehwerkzeug zum Abziehen der äußeren Kettenverbinder von der Gleiskette und zum erneuten Aufschieben beziehungsweise Aufpressen der äußeren Kettenverbinder auf die Gleiskette angeordnet. In einer Ausführungsform weist das motorbetriebene Abziehwerkzeug einen Werkzeugschlitten mit zwei parallelen, an dem Werkzeugschlitten angeordneten, horizontal in Abziehrichtung ausgerichteten, stabförmigen Schubbolzen sowie einen an dem Werkzeugschlitten befestigbaren, vertikal ausgerichteten, stabförmigen Abziehbolzen auf. Die Schubbolzen sind über einen Motor derart kraftübertragend mit dem Werkzeugschlitten verbunden, dass sich die Schubbolzen aufgrund der Arbeit des Motors in axialer Richtung bewegen und sich der horizontale Abstand zwischen den zwei Schubbolzen und dem Abziehbolzen dadurch verringert. Die Schubbolzen sind vor der Demontage vor den seitlichen Öffnungen des äußeren Kettenverbinders an den Aufnahmebolzen positioniert. Der senkrecht ausgerichtete Abziehbolzen wird senkrecht durch die obere Durchgangsöffnung des äußeren Kettenverbinders gesteckt und am Werkzeugschlitten befestigt. Bei Betätigung der Hydraulik wird der Abstand zwischen den Schubbolzen und dem Abziehbolzen reduziert. Da die Schubbolzen in horizontaler Richtung fixiert sind, bewegt sich der Abziehbolzen mit dem daran fixierten äußeren Kettenverbinder in Abziehrichtung. Bei Abziehen des äußeren Kettenverbinders greifen die Aufnahmebolzen dann von der Seite in die seitlichen Öffnungen des äußeren Kettenverbinders ein.

Ein Einpressadapter, der zwei Durchgangsöffnungen aufweist, kann vorteilhafterweise derart mittels der Durchgangsöffnungen auf die Schubbolzen des Abziehwerkzeugs aufgeschoben werden, dass mittels des Abziehwerkzeuges die äußeren Kettenverbinder auf die Aufnahmebolzen der Gleiskette aufschiebbar sind. Für die erneute Montage der äußeren Kettenverbinder mittels des auf dem Abziehwerkzeug montierten Einpressadapters, wird das Abziehwerkzeug mit einem feststehenden Rahmen, welcher an dem Arbeitsplatz angeordnet ist, starr verbunden.

An dem kompakten Werkzeugschlitten ist vorzugsweise die Abziehmechanik montiert und der Werkzeugschlitten ist bevorzugt innerhalb einer Gleitführung beweglich gelagert. Die Werkzeugbaugruppe des Abziehwerkzeuges verfügt in einer besonderen Ausgestaltung über eine horizontale und eine vertikale Gleitführung, welche mittels einer zusätzlichen Werkzeugführung ermöglicht wird. Mit dieser Werkzeugführung wird das Abziehwerkzeug auf die jeweilige Höhe und Breite der Gleiskette eingestellt. Der Werkzeugschlitten des Abziehwerkzeugs ist höhenverstellbar ausgeführt. Die Höhenverstellung erfolgt beispielsweise mittels eines Handrades und einer Gewindespindel oder auch mittels eines Linearantriebes.
Das Abziehwerkzeug besteht in einer Variante aus einem Werkzeugschlitten, in den ein Hydraulikzylinder eingeschraubt ist, einer Platte mit daran befestigten Schubbolzen, wobei die Platte auf die Kolbenstange des Hydraulikzylinders geschraubt ist, sowie einem Abziehbolzen, der an dem Werkzeugschlitten mittels eines Splints gesichert ist. Die Platte mit den Schubbolzen kann vorteilhafterweise ohne großen Aufwand ausgewechselt werden, um das Abziehwerkzeug an die entsprechende Gleiskette anzupassen. Die Geometrie und der Achsabstand der beiden Schubbolzen sind der Geometrie und dem Lochabstand beziehungsweise dem Achsabstand der äußeren Kettenverbinder angepasst. Durch Fasen an den Bolzenenden wird ein gewisser Spielraum und somit eine größere Toleranz bei der Positionierung des Werkzeugs erreicht. An der der Gleiskette zugewandten Seite des Werkzeugschlittens sind vordere Bohrungen als Langlöcher ausgebildet. Dadurch ist eine geringe Schiefstellung des jeweiligen Abziehbolzens möglich, wodurch Imperfektionen bei der Ausrichtung der Gleiskette ausgeglichen werden können. Die Geometrie des Abziehbolzens sowie der verwendeten Schubbolzen ist den jeweiligen Kettenverbindern der unterschiedlichen Kettentypen angepasst. Durch die gewählte Position der Langlöcher und die genaue Positionierung des Hydraulikzylinders wird der Abstand von Bolzenanfang bis Bohrungsachse mit 25 mm definiert, welche genau der Hälfte der Breite der Kettenverbinder entsprechen. Die Bohrungen im Werkzeugschlitten an der der Gleiskette abgewandten Seite dienen der horizontalen Arretierung der Werkzeugbaugruppe. In diesen Löchern werden Bolzen positioniert, so dass der Werkzeugschlitten an einer horizontalen Führung arretiert wird.

Der gesamte Arbeitsplatz, an dem das Abziehwerkzeug angeordnet ist und der auch als zweiter Arbeitsplatz bezeichnet wird, ist vorzugsweise über eine extrem stabile Gleitlagerung mit selbstpositionierenden Gleitwellen verbunden. Dabei wird in einer Lagerung zwischen der Gleitwelle und einer zugehörigen Rahmenhülse ein gewisser Abstand gelassen. Bei einer Verbindung mit einem darunter stehenden Rahmen kann der zweite Arbeitsplatz durch einen Linearantrieb stufenlos in zwei Richtungen um 40 mm von der Nullstellung verschoben, also feinjustiert, werden. Des Weiteren existieren Werkzeughalterungen in Arbeitsnähe.
Zum Abziehen der äußeren Kettenverbinder wird die Schraube des zu entfernenden äußeren Kettenverbinders mittels eines Hochmoment-Schraubers gelöst und dann entfernt. Die Gleiskette wird mithilfe der aktiven Antriebseinheiten so positioniert, dass sich der zu entfernende Kettenverbinder in etwa am zweiten Arbeitsplatz befindet. Der zweite Arbeitsplatz wird nun über einen axial zur Kette arbeitenden Linearantrieb feinjustiert, sodass sich das Abziehwerkzeug in einer geeigneten Position zu dem zu entfernenden äußeren Kettenverbinder befindet. Anschließend wird die Werkzeugbaugruppe über die Höhenverstellung so eingestellt, dass sich die Bolzen des Abziehwerkzeuges genau in Höhe der Achsen der Kettenglieder, welche auch als Aufnahmebolzen bezeichnet werden, befinden. Die Werkzeugbaugruppe wird über den äußeren Kettenverbinder geschoben und der zugehörige Abziehbolzen wird sowohl durch das Abziehwerkzeug als auch in die obere Durchgangsöffnung des Kettenverbinders gesteckt. Durch das Ausfahren des Hydraulikzylinders wird nun der Kettenverbinder von den Achsen der beiden angrenzenden Kettenglieder gezogen. Die Werkzeugbaugruppe bleibt während des gesamten Vorgangs lose in der horizontalen Führung. Sobald der Verbinder abgezogen ist, wird das Ausfahren des Hydraulikzylinders gestoppt und dieser fährt selbständig wieder ein. Nun wird der Abziehbolzen entfernt und der Kettenverbinder kann entnommen werden.
Zum Aufpressen der äußeren Kettenverbinder wird die Gleiskette über die Antriebseinheiten so positioniert, dass sich der Stoß der beiden zu verbindenden Kettenglieder in etwa beim zweiten Arbeitsplatz befindet. Der zweite Arbeitsplatz wird nun über den axial zur Gleiskette arbeitenden Linearantrieb feinjustiert, sodass sich das Abziehwerkzeug in geeigneter Position zu dem Stoß befindet. Anschließend wird die Werkzeugbaugruppe über die Höhenverstellung so eingestellt, dass sich die Schubbolzen des Abziehwerkzeuges genau in der Höhe der Achsen der Kettenglieder befinden. Nun werden beidseitig des zweiten Arbeitsplatzes auf die Schubbolzen die Einpressadapter geschoben. Auf der zu verbindenden Seite werden der neue, zu montierende äußere Kettenverbinder eingelegt und die Werkzeugschlitten so weit wie möglich an die Kette geschoben. Die Werkzeugschlitten werden mittels der Sicherungsbolzen mit den Werkzeugführungen horizontal arretiert, sodass sie in ihrer Position fixiert sind. Beim Ausfahren des Hydraulikzylinders wird nun der äußere Kettenverbinder auf die Aufnahmebolzen der Kettenglieder gepresst, wobei die gegenüberliegende Seite des zweiten Arbeitsplatzes als Gegenlager fungiert.

In einer besonders bevorzugten Ausgestaltung der Ketteninstandsetzungsvorrichtung weist diese einen Arbeitsplatz auf, an dem ein vertikal ausgerichtetes Abziehelement zum Abziehen der Kettenpolster angeordnet ist. Das Abziehelement ist derart kraftübertragend mit einem horizontal in der Richtung des Abziehvorgangs ausgerichteten, stabförmigen Gegenstück verbunden, dass der horizontale Abstand zwischen dem Abziehelement und dem Gegenstück durch die Arbeit eines Motors reduzierbar ist. Optional sind zwei Abziehelemente, die mit zwei auf beiden Seiten der Gleiskette angeordneten Gegenstücken zusammenwirken, an dem Arbeitsplatz angeordnet, um die Kettenpolster von beiden Seiten der Gleiskette zu entfernen. In einer alternativen Ausführung ist ein einzelnes Abziehelement derart mit unterschiedlichen Gegenstücken verbindbar ausgestaltet, dass das eine Abziehelement in beide Richtungen wirken kann.

Die Kettenpolster sowie die äußeren Kettenverbinder werden in Abziehrichtung von der Gleiskette abgezogen und in Aufpressrichtung werden die äußeren Kettenverbinder und die Kettenpolster auf die Gleiskette aufgeschoben oder aufgepresst. Die Richtung des Abziehvorgangs oder auch die Abziehrichtung ist im Sinne der Erfindung eine Richtung, welche in Bezug auf die Gleiskette definiert ist. Eine Richtung, die horizontal verläuft und senkrecht zur Laufrichtung der Gleiskette ausgerichtet ist, stellt im Sinne der Erfindung die Abziehrichtung dar, wobei die Abziehrichtung von der Mitte der Gleiskette weg weist. Die gegenläufige Richtung von außen in Richtung der Mitte der Gleiskette wird als Aufpressrichtung bezeichnet.

Zum erneuten Aufpressen der Kettenpolster ist an einem Arbeitsplatz ein vertikal ausgerichtetes Aufpresselement angeordnet. Das Aufpresselement ist derart kraftübertragend mit einem horizontal entgegen der Richtung des Abziehvorganges und somit in Aufpressrichtung ausgerichteten, stabförmigen Gegenstück verbunden, dass der Abstand zwischen dem Aufpresselement und dem Gegenstück durch die Arbeit eines Motors reduzierbar ist. Die Wirkweise des Aufpresselementes in Verbindung mit einem Gegenstück entspricht im Wesentlichen der des Abziehelementes. Allerdings ist das Gegenstück beim Aufpressvorgang auf der dem aufzupressenden Kettenpolster gegenüberliegenden Seite angeordnet, während das Gegenstück, welches mit dem Abziehelement zusammenwirkt auf der Seite der Gleiskette angeordnet ist, zu der das Kettenpolster abgezogen werden soll. Bevorzugt sind zwei Aufpresselemente, die mit zwei auf beiden Seiten der Gleiskette angeordneten Gegenstücken zusammenwirken, an dem Arbeitsplatz angeordnet, um die Kettenpolster von beiden Seiten der Gleiskette auf die Gleiskette zu schieben oder aufzupressen. Alternativ ist ein einzelnes Aufpresselement derart mit unterschiedlichen Gegenstücken verbindbar ausgestaltet, dass das eine Aufpresselement in beide Richtungen wirken kann.

Der Motor oder die Motoren, welche zum Abziehen und erneuten Aufschieben der äußeren Kettenverbinder sowie auch der Motor oder die Motoren, die zur Demontage und Montage der Kettenpolster verwendet werden, sind vorzugsweise Hydraulikmotoren.

An dem Arbeitsplatz, der zum Abziehen der Kettenpolster vorgesehen ist und der auch als dritter Arbeitsplatz bezeichnet wird, sieht eine vorzugsweise Ausgestaltung unter Verwendung eines Hydraulikmotors vor, dass das Gegenstück ein Kolben ist, wobei das Abziehelement derart starr mit einem mit dem Kolben zusammenwirkenden Hydraulikzylinder verbunden ist, dass eine Bewegung des Hydraulikzlinders in Bezug auf den Kolben aufgrund der in dem Hydraulikzylinder hydraulisch erzeugten Kraft eine Bewegung des Abziehelementes in Richtung des Kolbens verursacht. Ebenso sieht eine bevorzugte Variante an dem Arbeitsplatz, der zum Aufpressen der Kettenpolster vorgesehen ist, unter der Verwendung eines Hydraulikmotors vor, dass das Gegenstück ein Kolben ist. Das Aufpresselement ist dabei derart starr mit einem mit dem Kolben zusammenwirkenden Hydraulikzylinder verbunden, dass eine Bewegung des Hydraulikzylinders aufgrund der in dem Hydraulikzylinder hydraulisch erzeugten Kraft eine Bewegung des Aufpresselementes in Richtung des Kolbens verursacht.

Dieser dritte Arbeitsplatz weist in einer vorteilhaften Ausführung an einem speziell gestalteten Werkzeugschlitten bestimmte Positionen der Werkzeugaufnahmen auf. Die Geometrie der Werkzeugaufnahmen ist so gestaltet, dass die Werkzeuge nur in einer bestimmten Richtung eingesetzt werden können. Die Höhe der Hydraulikzylinder ist derart festgelegt, dass die Kolbenstange beziehungsweise die Kolbenstangenverlängerung zwar genau auf den Grundkörper der Kettenglieder drücken kann, aber die Öffnung zum Lösen der Rastsicherung der Polster durch die Kolbenstange und die Kolbenstangenverlängerung nicht verdeckt beziehungsweise das Polster selbst nicht beim Abziehvorgang behindert wird. Die Kolbenstangenverlängerung ist schraubbar und in Abhängigkeit von den unterschiedlichen Gleiskettenbreiten in unterschiedlichen Längen ausgeführt.

Das speziell gestaltete Abziehelement ist in einer besonderen Variante universell für unterschiedliche Kettenpolstertypen und Gleiskettentypen verwendbar und durch Rastbolzen in den Werkzeugaufnahmen stufenweise höhenverstellbar. Die Kraftwirkung der Hydraulikzylinder während der Arbeitsprozesse wirkt innerhalb des Werkzeugschlittens und der Werkzeugführungen. Die Feinjustierung der Werkzeugeinheit, also des Werkzeugschlittens und der Werkzeugführung erfolgt über einen axial angeordneten Linearantrieb, der vorzugsweise bis zu 100 mm aus der Nullstellung variieren kann. Diverse Werkzeughalterungen sind in der Nähe des dritten Arbeitsplatzes angeordnet. Alternativ ist an dem dritten Arbeitsplatz ein Positionshalter oder eine Anpresswange mit einem Zugfedermechanismus zum Andrücken der durch die Kettenvorspannung erzeugten Aufwölbung des Kettenendes angeordnet.

Beim Prozess des Abziehens der Kettenpolster wird vorteilhaft zunächst die Rastsicherung des zu entfernenden Kettenpolsters durch das manuelle Einschlagen eines Keiles gelöst. Optional kann das manuelle Einschlagen des Keils zum Lösen der Rastsicherung auch durch die Verwendung von Hydraulikzylindern mit einer verdrehsicher gelagerten Kolbenstange und einer Kolbenstangenverlängerung mit einem integrierten Keil ersetzt werden. Die Gleiskette wird über die Antriebseinheiten derart positioniert, dass sich das zu entfernende Kettenpolster etwa am dritten Arbeitsplatz befindet. Das Abziehelement wird in die Werkzeugaufnahme im Werkzeugschlitten gesteckt und über den axial zur Gleiskette angeordneten Linearantrieb und das manuelle Verschieben des Werkzeugschlittens quer zur Gleiskette erfolgt die Feinjustierung der Werkzeugeinheit derart, dass das Abziehwerkzeug in eine Tasche des zu entfernenden Kettenpolsters gleitet. Durch das Ausfahren des Hydraulikzylinders fährt die Kolbenstange von außen, zwischen die Kettenverbinder, gegen den Grundkörper des Kettengliedes und das Abziehelement bewegt sich von der Mitte der Gleiskette weg, sodass das Kettenpolster aus dem Grundkörper herausgezogen wird.

Beim Aufpressen der Kettenpolster wird die Gleiskette bevorzugt über die Antriebseinheiten derart positioniert, dass sich das zu polsternde Kettenglied etwa am dritten Arbeitsplatz befindet. Über den axial angeordneten Linearantrieb und das manuelle Verschieben des Werkzeugschlittens quer zur Gleiskette erfolgt die Feinjustierung der Werkzeugeinheit derart, dass die Kolbenstange bzw. die Kolbenstangenverlängerung zwischen die angrenzenden Kettenverbinder passt. Die Federn des einzupressenden Kettenpolsters werden in die Nuten des Grundkörpers gelegt und das Kettenpolster wird manuell so weit wie möglich eingeschoben. Das Aufpresselement wird in die Werkzeugaufnahme im Werkzeugschlitten gesteckt. Durch das Ausfahren des gegenüberliegenden Hydraulikzylinders fährt dessen Kolbenstange von außen, zwischen den Kettenverbindern, gegen den Grundkörper des Kettengliedes und das Polster wird in den Grundkörper hereingezogen beziehungsweise auf den Grundkörper aufgepresst.

In einer vorteilhaften Ausgestaltung ist am die untere Rollenbahn erweiternden Aufgabe- und Abgabebereich für die Gleiskette ein Niederhalter angeordnet. Der Niederhalter fungiert als eine räumliche Begrenzung der Gleiskette nach oben, sodass die Bewegungsfreiheit der Gleiskette eingeschränkt wird. Aufgrund der Tatsache, dass die Gleiskette eine starke Vorspannung aufweist, wölbt sie sich im abgewickelten Zustand nach oben. In einer Lage, in der die Kettenpolster nach unten weisen, liegt sie also nicht horizontal auf dem Boden auf, sondern die Endstücken stehen in vertikaler Richtung in die Höhe. Nach dem Einfädeln der Gleiskette unter den Niederhalter verhindert dieser die Wölbung nach oben und vereinfacht somit den Vorgang des Einführens der Gleiskette in die Ketteninstandsetzungsvorrichtung erheblich.

Konzeptionsgemäß kann eine Gleiskette ohne zerlegt zu werden innerhalb der Ketteninstandsetzungsvorrichtung zu verschiedenen Arbeitsplätzen geführt werden, an denen sie bearbeitet werden kann. Mehrere aktive Antriebseinheiten greifen an unterschiedlichen Orten mit ihren Antriebsrädern in die Gleiskette ein und befördern diese durch einen Gleiskettenbeförderungskreislauf, der aus zwei übereinander angeordneten passiven Rollenbahnen und zwei Umlenkeinrichtungen besteht. Durch eine Beförderung der Gleiskette durch eine der Umlenkeinrichtungen hindurch wird die Gleiskette von der unteren zur oberen Rollenbahn verbracht oder umgekehrt. Dabei findet eine Drehung der Gleiskette statt, sodass die Oberseite zur Unterseite wird und umgekehrt. An der unteren Rollenbahn ist außerdem ein einseitig offener Aufgabe- und Abgabebereich angeordnet durch den die Gleiskette in die Ketteninstandsetzungsvorrichtung ein- und ausgeführt werden kann.

Zum Einführen der Gleiskette in die Ketteninstandsetzungsvorrichtung wird diese beispielsweise in Form eines Kettenwickels, welche auf einer geeigneten Wickelvorrichtung transportierbar ist, zur Rollenbahn verbracht und auf der Rollenbahn abgesetzt oder aufgelegt.

Das Kettenende wird vorzugsweise derart positioniert und in die Führung und unter den Niederhalter geschoben bis die Antriebsräder der ersten Antriebseinheit vollständig in die Gleiskette greifen. Die Höhe der Antriebseinheiten wird entsprechend des vorliegenden Gleiskettentyps und unter Berücksichtigung des Abnutzungsgrades der Kettenpolster geeignet eingestellt. Beispielsweise durch eine Betätigung einer Fernbedienung werden die Antriebseinheiten gesteuert und die Gleiskette wird in die Anlage gezogen, wobei die Gleiskette beispielsweise von einer geeigneten Wickelvorrichtung abgewickelt wird.

Nach der Instandsetzung der Gleiskette wird diese aus der Ketteninstandsetzungsvorrichtung herausgefahren und kann dabei automatisch in einer Wickelvorrichtung zu einem Kettenwickel aufgerollt werden.

Die Instandsetzung von Gleisketten wird deutlich wirtschaftlicher mit der Ketteninstandsetzungsvorrichtung durchgeführt, da bei einer Instandsetzung unter Nutzung der Ketteninstandsetzungsvorrichtung weniger Personal die Instandsetzung deutlich schneller realisieren kann. Das Handling der Gleiskette erfolgt mechanisiert und automatisiert, wodurch bestimmte Arbeitsschritte, wie beispielsweise das Zerlegen und das nach der Instandsetzung fällige Zusammensetzen der Gleiskette, entfallen. Da die körperlichen Belastungen des Instandsetzungspersonals stark gemindert werden, hat die Ketteninstandsetzungsvorrichtung sehr positive Effekte in Bezug auf die Ergonomie und die Arbeitssicherheit.

Die Ketteninstandsetzungsvorrichtung hat vorteilhaft diverse Einstellmöglichkeiten, um eine Anpassung an unterschiedliche Gleisketten mit verschiedenen Kettenbreiten und Teilungen sowie variierenden Abnutzungsgraden schnell und ohne zeitaufwändige Umbauten zu ermöglichen.

Die hohe Arbeitszeitersparnis sowie die verringerten Belastungen für das Instandsetzungspersonal führen dazu, dass eine Instandsetzung von Gleisketten wirtschaftlicher realisiert werden kann und somit weniger Gleisketten verschrottet werden müssen. Daraus resultiert eine erhöhte Nachhaltigkeit, da eine Instandsetzung im Vergleich zu einer Verschrottung und Neufertigung ressourcen- und umweltschonender ist.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- Fig. 1:: eine Ketteninstandsetzungsvorrichtung,
- Fig. 2 a :: einen Aufpressvorgang der äußeren Kettenverbinder,

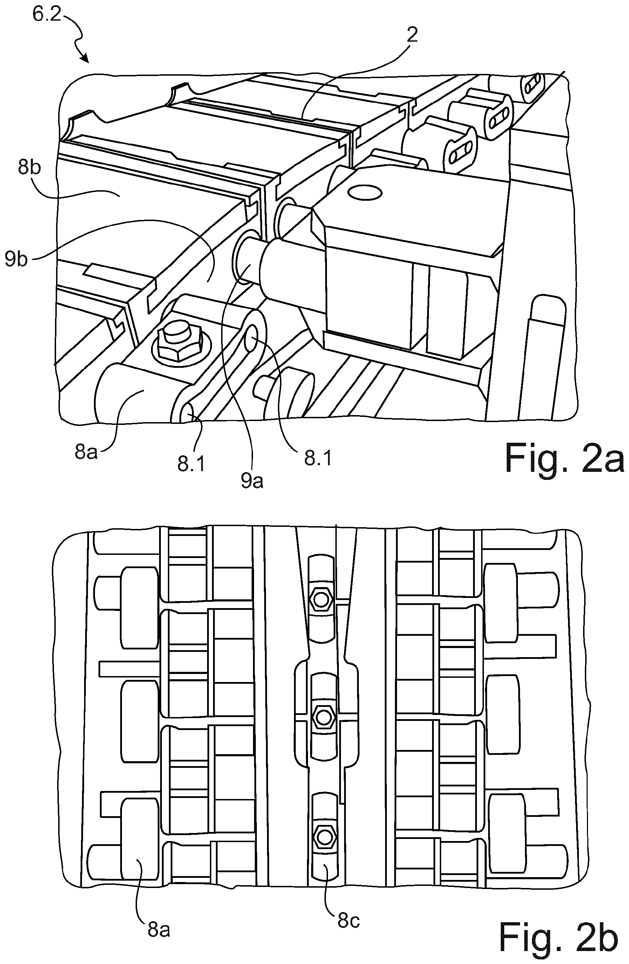

- Fig. 2 b:: montierte mittlere Kettenverbinder auf einer Gleiskette,

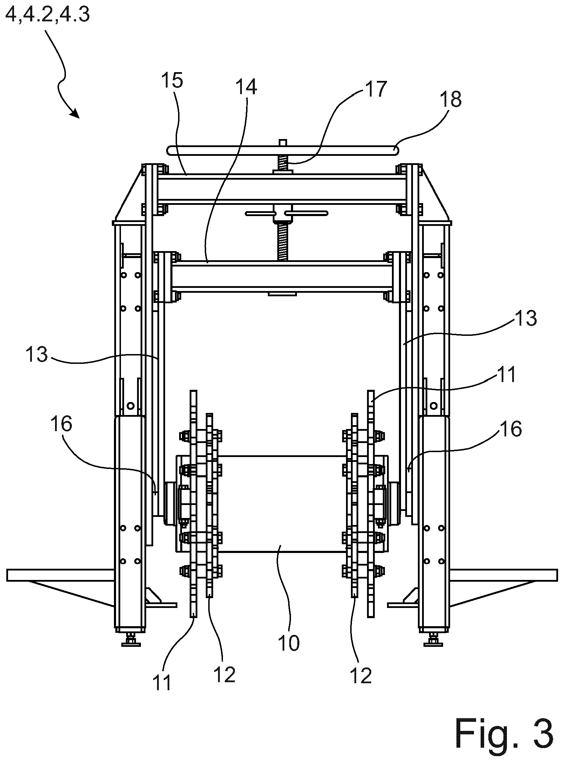

- Fig. 3:: eine Antriebseinheit für den Antrieb einer Gleiskette,

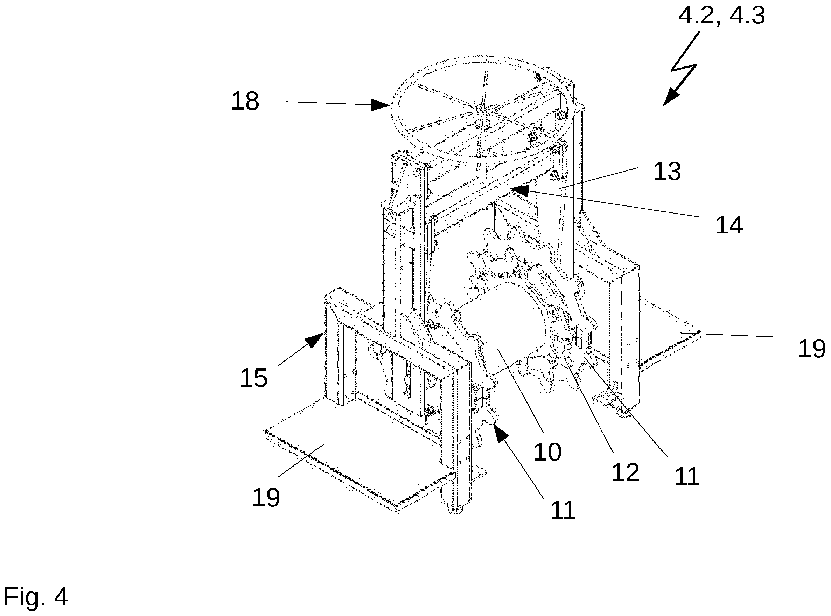

- Fig. 4:: eine perspektivische Ansicht der Antriebseinheit,

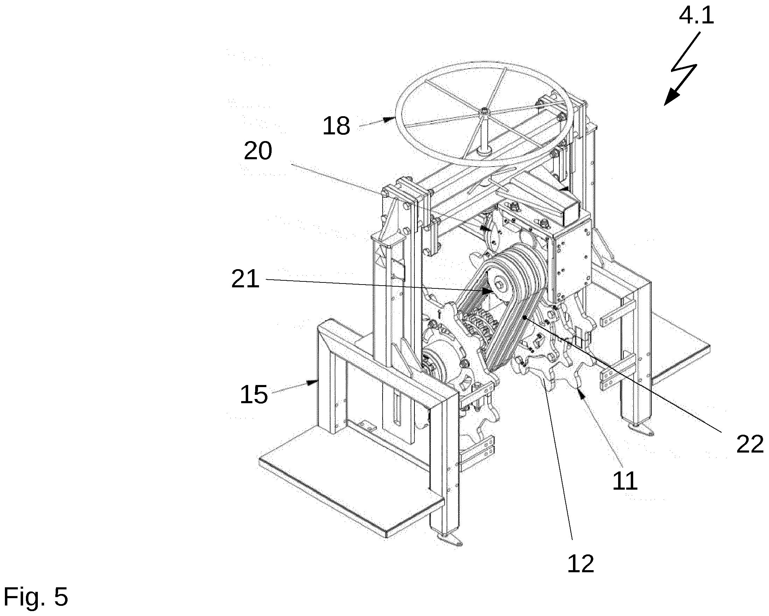

- Fig. 5:: eine Antriebseinheit mit Getriebemotor und Rollenkette,

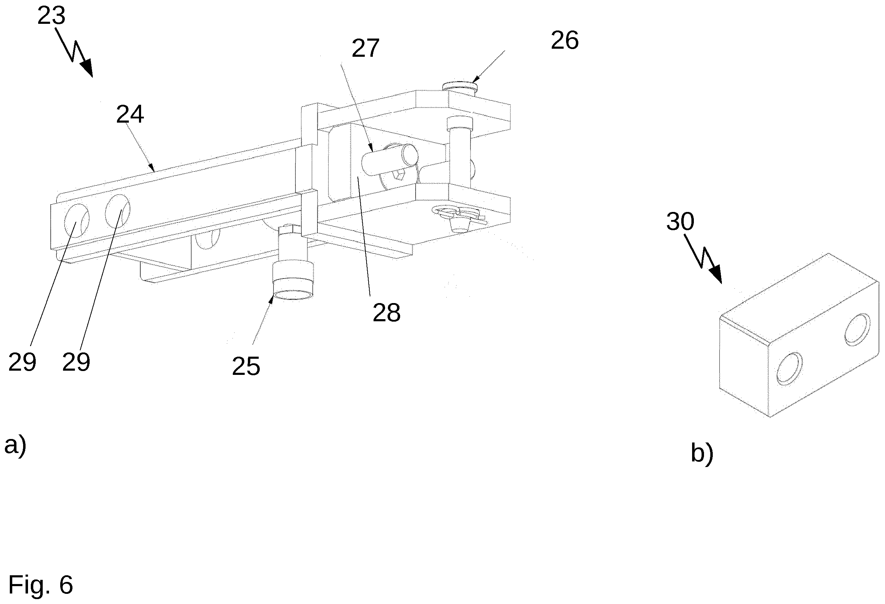

- Fig. 6 a:: ein Abziehwerkzeug zum Abziehen der äußeren Kettenverbinder,
- Fig. 6 b:: einen Einpressadapter für das Abziehwerkzeug zur Montage eines äußeren Kettenverbinders,

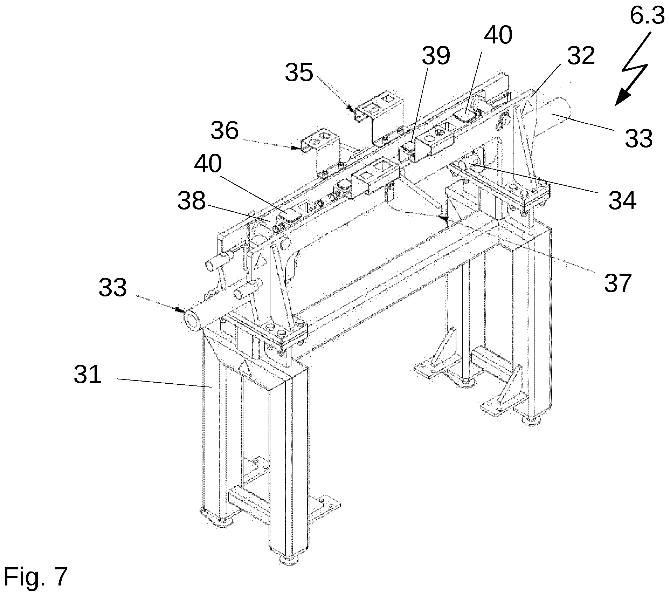

- Fig. 7:: eine perspektivische Ansicht eines Arbeitsplatzes zur Montage und Demontage der Kettenpolster,

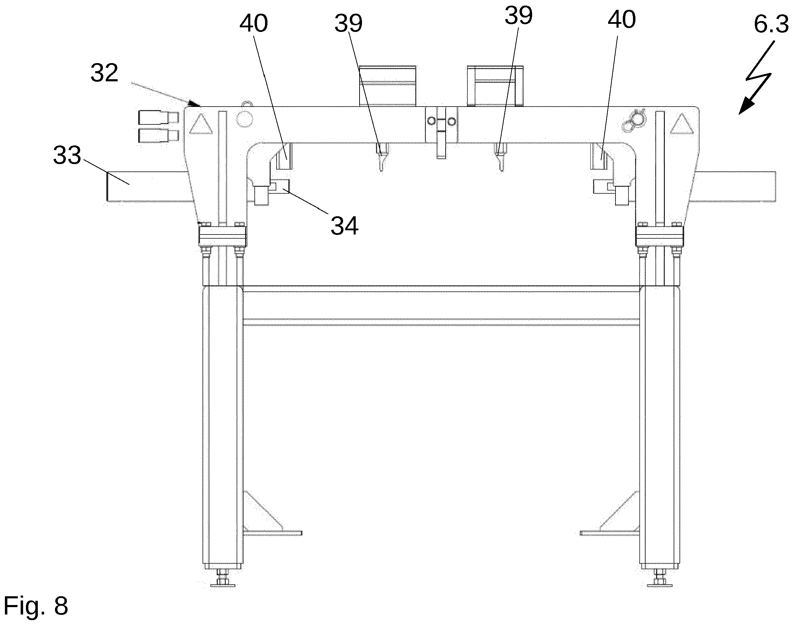

- Fig. 8:: eine Ansicht des Arbeitsplatzes zur Montage und Demontage der Kettenpolster von der Seite,

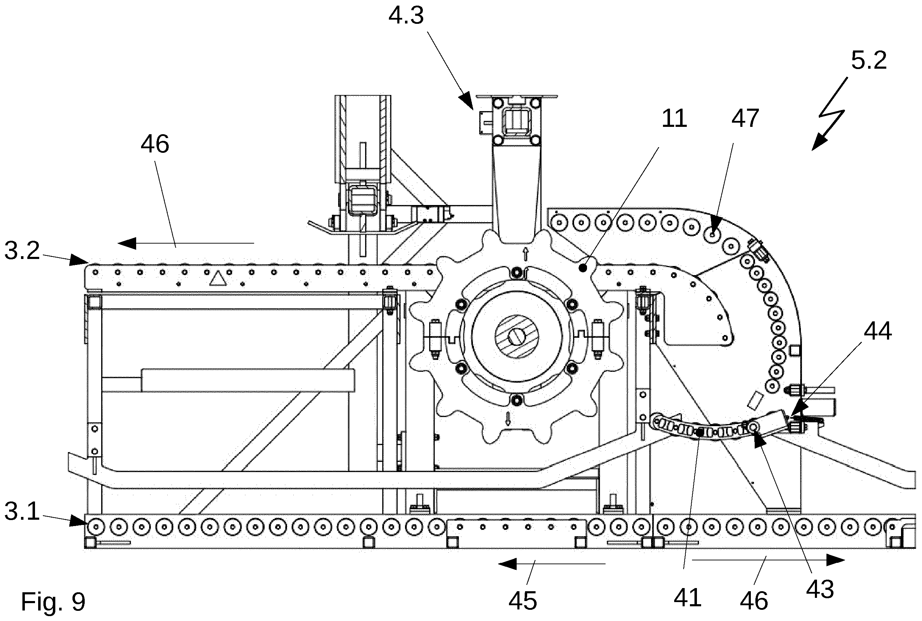

- Fig. 9:: eine Detailansicht der zweiten Umlenkeinrichtung in der Nullstellung und

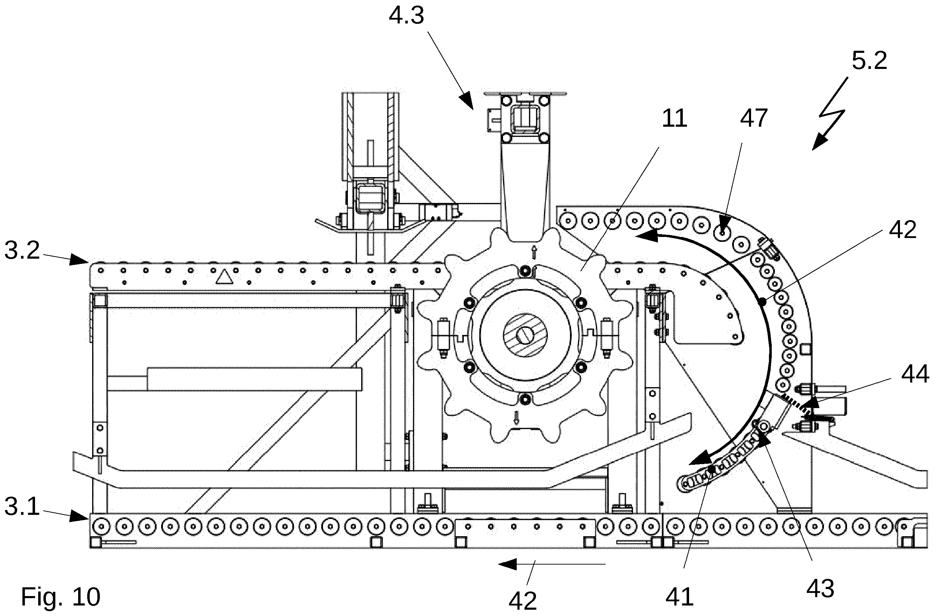

- Fig. 10:: eine Detailansicht der zweiten Umlenkeinrichtung in der Umlaufstellung.

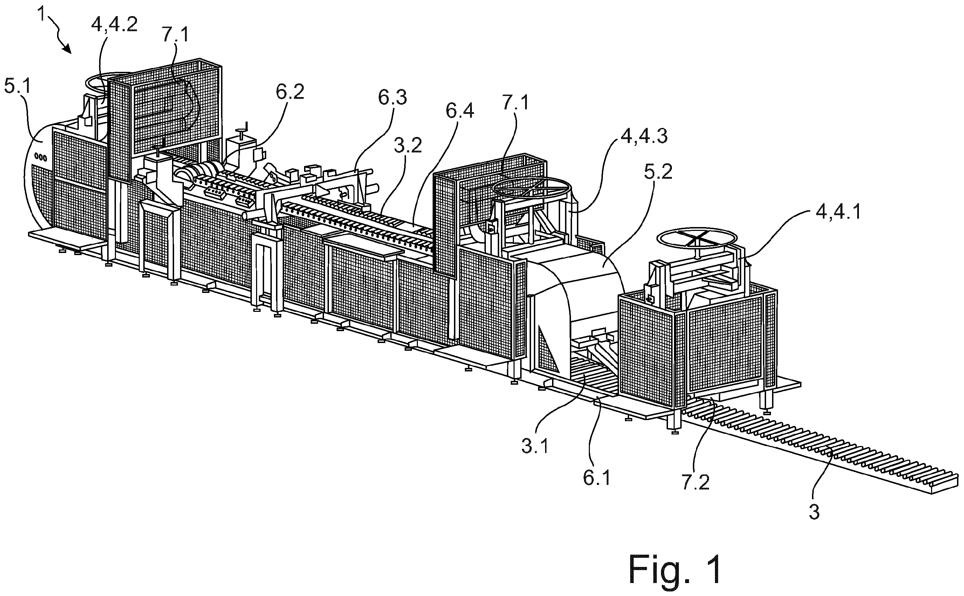

In **Fig. 1** ist ein Ausführungsbeispiel einer Ketteninstandsetzungsvorrichtung 1 dargestellt. Eine solche Ketteninstandsetzungsvorrichtung 1 wird für die Wartung und Reparatur von, in Fig. 2 dargestellten, Gleisketten 2 verwendet. Dabei wird die Gleiskette 2 auf einer Rollenbahn 3 durch die Ketteninstandsetzungsvorrichtung 1 befördert, wobei die Gleiskette 2 durch Antriebseinheiten 4 angetrieben wird. Die Antriebseinheiten 4 sind derart ausgebildet, dass sie in die Gleiskette 2 eingreifen und diese aktiv antreiben beziehungsweise bewegen können. Mehrere Antriebseinheiten 4 sind an unterschiedlichen Punkten entlang der Rollenbahn 3 angeordnet, sodass die Beförderung der Gleiskette 2 je nach ihrer Position in der Ketteninstandsetzungsvorrichtung 1 durch eine Antriebseinheit oder durch mehrere Antriebseinheiten 4 gleichzeitig erfolgt.

Die Rollenbahn besteht aus einer unteren Rollenbahn 3.1 und einer oberer Rollenbahn 3.2, welche mittels zweier Umlenkeinrichtungen 5.1, 5.2 verbunden sind. Die Gleiskette 2 wird zu Beginn des Instandsetzungsprozesses zunächst auf der unteren Rollenbahn 3.1 vom einseitig offenen Aufgabe- und Abgabebereich in den unteren Teil der Ketteninstandsetzungsvorrichtung 1 befördert, wobei die Gleiskette 2 von einer ersten Antriebseinheit 4.1 angetrieben wird. Die Gleiskette 2 gelangt nach dem Durchlaufen der unteren Rollenbahn 3.1 am Ende der unteren Rollenbahn 3.1 zu einer zweiten Antriebseinheit 4.2., von der die Gleiskette 2 weiter zu einer ersten Umlenkeinrichtung 5.1 verbracht wird. Mittels dieser Umlenkeinrichtung 5.1 wird die durch die zweite Antriebseinheit 4.2 weiter beförderte Gleiskette 2 aus einer horizontalen Position in vertikaler Richtung nach oben abgelenkt und bei weiterer Beförderung wieder zurück in eine horizontale Richtung umgelenkt, wobei die Gleiskette 2 auf die obere Rollenbahn 3.2 befördert wird. Beim Prozess des Umlenkens der Gleiskette 2 wird die Grundspannung der Gleiskette 2 genutzt, welche bewirkt, dass der vordere Teil der Gleiskette 2 dazu neigt nicht auf dem Boden aufzuliegen, sondern in vertikaler Richtung nach oben abzustehen beziehungsweise sich aufzurollen. Nach dem Passieren der Umlenkeinrichtung 5.1 liegt die Gleiskette 2 auf der oberen Rollenbahn 3.2 um 180° gedreht auf, was bedeutet, dass der Teil der Gleiskette 2, welcher als Unterseite auf der unteren Rollenbahn 3.1 auflag, sich nun, von der oberen Rollenbahn 3.2 abgewandt,auf der Oberseite befindet. Dementsprechend liegt der Teil der Gleiskette 2, welcher auf der unteren Rollenbahn 3.1 die Oberseite der Gleiskette 2 bildet, auf der oberen Rollenbahn 3.2 als Unterseite auf der Rollenbahn 3.2 auf. Nach weiterer Beförderung passiert die Gleiskette 2 auch die dritte Antriebseinheit 4.3, welche derart höhenverstellbar ist, dass wahlweise ein Eingreifen in eine auf der oberen oder in eine auf der unteren Rollenbahn 3.1, 3.2 aufliegende Gleiskette möglich ist. Wird die Gleiskette 2 mittels der dritten Antriebseinheit 4.3 weiter befördert, so gelangt die Gleiskette 2 an die zweite Umlenkeinrichtung 5.2 mittels welcher die Gleiskette 2 von der oberen auf die untere Rollenbahn 3.2, 3.1 leitbar ist. Dabei wird der vordere Teil der Gleiskette 2 auf die untere Rollenbahn 3.1 gelenkt, wobei die Gleiskette 2 dabei aus einer horizontalen Position abwärts in eine vertikale Position und anschließend zurück in eine horizontale Position abgelenkt wird. In dem von den Umlenkeinrichtungen 5.1, 5.2 begrenzten Bereich kann die Gleiskette 2 wie in einem Kreislauf befördert werden und somit erreicht jeder Abschnitt der Gleiskette 2 an der Ketteninstandsetzungsvorrichtung 1 angeordnete Arbeitsplätze 6. Zudem sind die Antriebseinheiten 4 in zwei Richtungen betreibbar, sodass die Gleiskette 2 in entgegengesetzter Richtung zum Einführprozess wieder ausgeführt werden kann.

Nachdem die Gleiskette 2 die erste Antriebseinheit 4.1 passiert hat, wird die Gleiskette 2 durch weitere Beförderung zu einem ersten Arbeitsplatz 6.1 verbracht. Nach Durchlaufen der unteren Rollenbahn 3.1 sowie der ersten Umlenkeinrichtung 5.1 gelangt die Gleiskette 2 auf die obere Rollenbahn 3.2, wo nebeneinander, beziehungsweise in Richtung der Beförderung der Gleiskette 2 nacheinander, drei weitere Arbeitsplätze 6.2, 6.3, 6.4 angeordnet sind. Wenn die gesamte Gleiskette 2 im Laufe des Instandsetzungsprozesses alle Arbeitsplätze 6,1, 6.2, 6.3, 6.4 passiert hat, so wird die Gleiskette 2 mittels der Antriebseinheiten 4, die in zwei Richtungen betreibbar sind, wieder zurückgeschoben. Die Kette wird dann in entgegengesetzter Richtung wieder aus der Ketteninstandsetzungsvorrichtung 1 herausgeschoben und -gezogen. Der Abschnitt der Gleiskette 2, der beim Einschieben zuerst in die Ketteninstandsetzungsvorrichtung 1 gelangte, wird als letztes herausgezogen.

An den vier verschiedenen Arbeitsplätzen 6.1, 6.2, 6.3, 6.4 werden unterschiedliche Elemente der Gleiskette 2 bearbeitet. Nach dem Einführen der Gleiskette 2 wird diese durch die Antriebseinheit 4.1 zum ersten Arbeitsplatz 6.1 verbracht, an dem die inneren Kettenverbinder 8c, dargestellt in Fig. 2b entfernt werden. Daraufhin gelangt die Gleiskette 2 nach dem Passieren der ersten Umlenkeinrichtung 5.1 auf der oberen Rollenbahn 3.2 zu dem zweiten Arbeitsplatz 6.2, an dem die äußeren Kettenverbinder 8a, die in Fig. 2a dargestellt sind, abgezogen werden. Außerdem können an diesem Arbeitsplatz 6.2 die äußeren Kettenverbinder 8a wieder aufgeschoben und arretiert werden. Da die Gleiskette 2, auf der oberen Rollenbahn 3.2 um 180 ° gedreht aufliegt im Vergleich zur Position auf der unteren Rollenbahn 3.1, bildet die Seite, auf der die in in Fig. 2a abgebildeten Kettenpolster 8b befestigt sind, bei Aufliegen der Gleiskette 2 auf der oberen Rollenbahn 3.2 und somit am an der oberen Rollenbahn 3.2 angeordneten dritten Arbeitsplatz 6.3 die Oberseite der Gleiskette 2. Dementsprechend können dann an dem dritten Arbeitsplatz 6.3 die Kettenpolster 8b demontiert und wieder erneut montiert werden. An dem vierten Arbeitsplatz 6.4 ist die Ausführung zusätzlicher Schweiß- und Schneidearbeiten möglich. Der zweite Arbeitsplatz ist in Fig. 6 und der dritte Arbeitsplatz 6.3 ist in den Figuren 7 und 8 detailliert dargestellt.

Zur Fixierung der Gleiskette 2 auf der Rollenbahn 3 wird die Gleiskette gebremst. Dafür sind zwei Bremsen 7.1, die vorzugsweise als pneumatische Bremsen ausgebildet sind, oberhalb der oberen Rollenbahn 3.2 angeordnet. Wenn die Gleiskette 2 nicht bewegt werden soll, üben die Bremsen 7.1 auf der oberen Rollenbahn 3.2 einen Druck von oben auf die Gleiskette 2 aus, um zu verhindern, dass das Eigengewicht der Gleiskette 2 diese wieder hinunter auf die untere Rollenbahn 3.1 zieht.

Zur Verbesserung der Handhabbarkeit der Gleiskette 2 beim Einführen in die Ketteninstandsetzungsvorrichtung 1 umfasst diese einen Niederhalter 7.2, welcher am Zuführbereich der Ketteninstandsetzungsvorrichtung 1 oberhalb der unteren Rollenbahn 3.1 angeordnet ist. Unter den Niederhalter 7.2 wird die Gleiskette 2 eingefädelt, also in den Niederhalter 7.2 eingeschoben bis die Gleiskette 2 durch die erste Antriebseinheit 4 befördert werden kann. Der Niederhalter 7.2 bewirkt, dass das vordere Ende der Gleiskette 2 sich nicht beliebig nach oben biegen kann, sondern durch den Niederhalter 7.2 nach unten gedrückt wird und in die Ketteninstandsetzungsvorrichtung 1 eingefädelt wird. Die eingefädelte Gleiskette 2 passiert kurz nach dem Niederhalter 7.2 die erste Antriebseinheit 4.1, welche von oben in die Gleiskette 2 eingreift und diese dann in die Ketteninstandsetzungsvorrichtung 1 befördert.

In den **Figuren 2** bis **10** sind Einzelheiten der in Fig. 1 abgebildeten Ketteninstandsetzungsvorrichtung 1 dargestellt.

In **Fig. 2a** ist eine Gleiskette 2 am zweiten Arbeitsplatz 6.2 dargestellt, an dem die äußeren Kettenverbinder 8a von der Gleiskette 2 abgezogen werden. Dazu werden zwei seitliche Öffnungen 8.1 und eine obere Durchgangsöffnung 8.2 des äußeren Kettenverbinders 8a genutzt. In der oberen Durchgangsöffnung 8.2 steckt in dieser Abbildung eine Schraube, welche zuvor entfernt wird. Oben auf der Gleiskette 2 sind die Kettenpolster 8b dargestellt, die erst am, in den Figuren 7 und 8 dargestellten, dritten Arbeitsplatz 6.3 abgezogen werden. Die äußeren Kettenverbinder 8a sind an der Gleiskette 2 auf Aufnahmebolzen 9a gelagert, welche am Grundkörper 9b der Gleiskette 2 angebracht sind.

Die inneren Kettenverbinder 8c sowie die äußeren Kettenverbinder 8a sind in **Fig. 2b** dargestellt. Die inneren Kettenverbinder 8c werden bereits am ersten Arbeitsplatz 6.1, der an der unteren Rollenbahn 3.1 angeordnet ist, gelöst und demontiert. Der dargestellte innere Kettenverbinder 8c ist mittels einem kraft- und/ oder formschlüssigen Verbindungselement an der Gleiskette 2 fixiert. Nach Lösen des Verbindungselementes kann der sich auf der Oberseite der Gleiskette 2 befindende Abschnitt des inneren Kettenverbinders 8c entnommen werden. Der auf der Unterseite der Gleiskette 2 angeordnete Abschnitt des inneren Kettenverbinders 8c fällt dabei in ein dafür bereitstehendes Fach, das unterhalb der unteren Rollenbahn 3.1 angeordnet ist und wie ein Schubfach herausgezogen werden kann. Nach dem Herausziehen des Faches ist der untere Abschnitt des inneren Kettenverbinders 8c aus dem Fach entnehmbar. Die Antriebseinheiten 4 sind in den Figuren 3 bis 5 abgebildet. In den Figuren 3 und 4 sind die den Umlenkeinrichtungen 5.1, 5.2 zugeordneten Antriebseinheiten 4.2, 4.3 und in Fig. 5 ist die dem Zuführbereich zugeordnete Antriebseinheit 4.1 dargestellt.

Eine Darstellung von der Seite einer Antriebseinheit 4 zum Bewegen der Gleiskette 2 über die Rollenbahn 3 ist in **Fig. 3** abgebildet. Eine derartige Antriebseinheit 4 entspricht in diesem Ausführungsbeispiel der zweiten und dritten Antriebseinheit 4.2, 4.3. Das Kernstück bildet hier eine Ritzeltrommel 10, auf welcher zwei äußere Antriebsräder 11 sowie zwei innere Antriebsräder 12 montiert sind. Die Antriebsräder 11, 12 sind in die Gleiskette 2 eingreifbar und bewegen die Gleiskette 2 über die rollbar gelagerten Rollen der Rollenbahn 3. Die äußeren Antriebsräder 11 haben einen größeren Durchmesser als die inneren Antriebsräder 12. Somit ist die Antriebseinheit 4.2, 4.3 für zwei unterschiedliche Typen von Gleisketten 2 konfiguriert, ohne dass ein Abbau und eine erneute Montage der Antriebsräder 11, 12 notwendig ist, wenn ein anderer Typ einer Gleiskette 2 befördert werden soll. Wenn die inneren Antriebsräder 12 eine schmalere Gleiskette 2 antreiben sollen, so wird die Ritzeltrommel 10 ausreichend abgesenkt, sodass die inneren Antriebsräder 12 in die Gleiskette 2 greifen. Die äußeren Antriebsräder 11 senken sich dann neben der unteren Rollenbahn 3.1 nach unten ab, sodass die äußeren Antriebsräder 11 die Beförderung der Gleiskette 2 nicht behindern. Für den Fall einer breiteren Gleiskette 2 wird die Ritzeltrommel 10 entsprechend angehoben, so dass die äußeren Antriebsräder 11 in die Gleiskette 2 greifen und diese antreiben. Die inneren Antriebsräder 12 befinden sich dann oberhalb der Gleiskette 2, sodass der Gleiskettenantrieb nicht gestört wird.
Die Ritzeltrommel 10 ist an Vertikalträgern 13 befestigt, die an einem Horizontalträger 14 montiert sind. Mittels der Vertikalträger 13 hängt die Ritzeltrommel 10 also unter dem Horizontalträger 14, welcher innerhalb eines Rahmens der Antriebseinheit 15 angebracht ist. Der Horizontalträger 14 ist hier zwischen zwei vertikal verlaufende Säulen des Rahmens 15 angeordnet. Zwischen dem Rahmen 15 und dem Vertikalträger 13 befindet sich in der Höhe der Ritzeltrommel 10 auf jeder Seite ein Abstandsblech 16 zur Sicherung der Lage der Ritzeltrommel 10 und somit der äußeren und inneren Antriebsräder 11, 12, wodurch eine gleichmäßige Förderung der Gleiskette 2 erreicht wird. Die Höhenverstellung der äußeren und inneren Antriebsräder 11, 12 zur Anpassung an unterschiedliche Gleiskettentypen wird durch eine Höhenverstellung des Horizontalträgers 14 erreicht, welcher über eine Gewindestange 17 mit dem Rahmen 15 der Antriebseinheit 4.2, 4.3 verbunden ist. An der Gewindestange ist ein Handrad 18 angeordnet, mit dem die entsprechende Höhe eingestellt werden kann, sodass die Gewindestange 17 um ihre Achse hoch beziehungsweise herunter gedreht wird. Der damit verbundene Horizontalträger 14 sowie die daran befestigte Ritzeltrommel 10 mit den äußeren und inneren Antriebsrädern 11, 12 bewegt sich somit nach oben oder unten. Durch die Betätigung des Handrades 18 kann also die Höhe der Antriebsräder 11, 12 der Antriebseinheit 4.2, 4.3 entsprechend der zu befördernden Gleiskette 2 eingestellt werden.

In **Fig. 4** ist eine perspektivische Darstellung des Ausführungsbeispiels der auch in Fig. 3 abgebildeten Antriebseinheit 4.2, 4.3, dargestellt. Am Rahmen der Antriebseinheit 15 ist zur besseren Erreichbarkeit des Handrades 18 ein Trittbrett 19 angeordnet. Innerhalb der Ritzeltrommel 10 befindet sich ein Trommelmotor, der die Kraft zur Bewegung der Gleiskette 2 mittels der Antriebsräder 11, 12 zur Verfügung stellt.

Eine perspektivische Darstellung der Antriebseinheit 4.1, die am Zuführbereich angeordnet ist, mit einer Einheit zum Antrieb der Ritzeltrommel ist in **Fig. 5** dargestellt. Ein Getriebemotor 20 wird zum Antrieb eines Kettenrades 21 und einer das Kettenrad 21 umlaufenden Rollenkette 22 genutzt. Die Antriebsräder 11,12 werden über ein Kettenrad 21 und eine Rollenkette 22 vom Getriebemotor 20 angetrieben. Auch hier ist am Rahmen der Antriebseinheit 15 ist ein Trittbrett 19 angeordnet, wodurch das Handrad 18 leichter erreicht wird. Am zweiten Arbeitsplatz 6.2 werden die äußeren Kettenverbinder 8a von der Gleiskette 2 abgezogen. Dazu wird ein in **Fig. 6a** dargestelltes Abziehwerkzeug 23 verwendet. Das Abziehwerkzeug 23 weist einen Werkzeugschlitten 24 auf, welcher den Rahmen zur Aufnahme der austauschbaren Teile des Abziehwerkzeuges 23 bildet. Unterhalb des Werkzeugschlittens 24 ist ein Hydraulikzylinder 25 angebracht, der den Schub für das Zusammenwirken eines Abziehbolzens 26 und zweier Schubbolzen 27 zur Verfügung stellt. Die Schubbolzen 27 sind auf einer Platte 28 befestigt. Je nach der Größe der zu bearbeitenden Gleiskette 2 werden der passende Abziehbolzen 26 sowie die geeignete Platte 28 mit vormontierten Schubbolzen 27 am Werkzeugschlitten 24 des Abziehwerkzeuges 23 arretiert. Die Platte 28 wird mit dem Werkzeugschlitten 24 verschraubt und der Abziehbolzen 26 wird mit Hilfe eines Splints am Werkzeugschlitten 24 gesichert. Zum Abziehen der äußeren Kettenverbinder 8a wird der Abziehbolzen 26 in die obere Durchgangsöffnung 8.2 des äußeren Kettenverbinders 8a gesteckt und mittels des Splints am Abziehwerkzeug 23 arretiert. Die Schubbolzen 27 sind dann an den in der Fig. 2a dargestellten seitlichen Öffnungen 8.1 der äußeren Kettenverbinder 8a positioniert und liegen an den Aufnahmebolzen 9a der Gleiskette 2 an. Bei Betätigung des Hydraulikzylinders 25 wird eine Kolbenstange, die sich innerhalb des Abziehwerkzeugs befindet und an der die Platte 28 befestigt ist, mit der Platte 28 in Richtung des Abziehbolzens 26 geschoben. Somit verringert sich der Abstand zwischen der Platte 28 und dem Abziehbolzen 26. Da sich die Schubbolzen 27 an den seitlichen Öffnungen 8.1 der äußeren Kettenverbinder 8a befinden, liegen sie im Falle montierter äußerer Kettenverbinder 8a auf den in den seitlichen Öffnungen 8.1 steckenden Aufnahmebolzen 9a der Gleiskette 2 auf. Für den Abziehvorgang ist das Abziehwerkzeug 23 horizontal entlang der Achse der Schubbolzen 27 oder entlang der Richtung des Abziehvorganges in einer Gleitführung beweglich gelagert. Der Schub der Schubbolzen 27 nach Betätigung des Hydraulikzylinders 25 erzeugt eine Kraft, welche den Abstand zwischen Platte 28 und Abziehbolzen 26 verringert. Da die Position der Schubbolzen 27 in einer horizontalen Richtung aufgrund der festsitzenden Aufnahmebolzen 9a limitiert ist, sorgt der vorhandene Schub dafür, dass der äußere Kettenverbinder 8a mittels des Abziehbolzens 26 von der Gleiskette 2 abgezogen wird.

Das Abziehwerkzeug 23 ist außerdem zum Montieren eines äußeren Kettenverbinders 8a geeignet. Im Gegensatz zum Abziehvorgang wird das Abziehwerkzeug 23 für den Vorgang des Aufschiebens eines beispielsweise in Fig. 2a dargestellten äußeren Kettenverbinders 8a jedoch in horizontaler Richtung fixiert. Dafür wird das Abziehwerkzeug 23 mittels eines Splints in einer Aussparung 29 des Werkzeugschlittens 24 an der Gleitführung gesichert. Der Werkzeugschlitten ist dann horizontal fixiert. Die Auswahl einer der Aussparungen 29 hängt dabei von der Breite der Gleiskette 2 ab. Der in **Fig. 6b** dargestellte Einpressadapter 30 wird für den Prozess des Aufschiebens der äußeren Kettenverbinder 8a derart auf dem Abziehwerkzeug 23 angeordnet, dass die Schubbolzen 27 in die Öffnungen des Einpressadapters 30 greifen. Der zu montierende äußere Kettenverbinder 8a wird vor der Gleiskette 2 angeordnet, so dass er sich mit den seitlichen Öffnungen 8.1 vor den Aufnahmebolzen 9a der Gleiskette 2, auf die er montiert werden soll, befindet. Bei Inbetriebnahme der Hydraulik schiebt die Kolbenstange die Platte 28, den davor montierten Einpressadapter 30 sowie den vor dem Einpressadapter 20 positionierten äußeren Kettenverbinder 8a in Richtung der Gleiskette 2. Der äußere Kettenverbinder 8a wird dadurch auf die Aufnahmebolzen 9a der Gleiskette 2 geschoben und kann nachfolgend mittels eines Befestigungselementes, das durch die obere Durchgangsöffnung 8.2 geführt wird, an der Gleiskette 2 befestigt werden.

In **Fig. 7** ist eine mögliche Ausgestaltung des dritten Arbeitsplatzes 6.3 dargestellt, an die Kettenpolster 8b demontiert und montiert werden können, das heißt die Kettenpolster 8b werden von der Gleiskette 2 abgezogen und wieder auf diese aufgeschoben. Auf einem Rahmen 31 ist ein Aufbau 32 montiert, welcher der Werkzeugaufnahme dient. Die Kraft zum Abziehen oder Aufschieben der Kettenpolster 8b wird jeweils durch einen von zwei Hydraulikzylindern 33 mit je einem zugeordneten Kolben 34 zur Verfügung gestellt, die an dem Aufbau 32 zur Werkzeugaufnahme angeordnet sind. Des Weiteren befinden sich an dem Aufbau 32 ein Werkzeughalteblech 35 und ein Bolzenhalteblech 36, an denen vorteilhaft die jeweils nicht benötigten Elemente beziehungsweise Werkzeuge leicht zugänglich direkt am dritten Arbeitsplatz 6.3 aufbewahrt werden. Bevorzugt ist an dem Aufbau 32 zur Werkzeugaufnahme zusätzlich auch ein Positionshalter 37 angebracht. Der Positionshalter 37 begrenzt den Endbereich der Gleiskette 2 räumlich nach oben und verhindert somit, dass sich der Endbereich zu stark in vertikaler Richtung nach oben aufrichtet. Dieser Positionshalter 37 wirkt also von oben auf die wegen der Kettenvorspannung erzeugte Aufwölbung an den Enden der Gleiskette 2 und hält die Gleiskette 2 unten.
Die vorgenannten Hydraulikzylinder 33 mit Kolben 34 sind derart an einem Werkzeugschlitten 38 befestigt, der ebenfalls am Aufbau 32 zur Werkzeugaufnahme angeordnet ist, dass der Werkzeugschlitten 38 auch mittels der Hydraulik bewegt werden kann. Ein Abziehelement 39 sowie ein Aufpresselement 40 sind am Werkzeugschlitten fixiert. Zum Abziehen der Kettenpolster 8b nach außen in Abziehrichtung greift das Abziehelement 39 an der der Abziehrichtung entgegengesetzten Seite des abzuziehenden Kettenpolsters 8b, also zwischen den beiden gegenüberliegenden Kettenpolstern 8b, ein, sodass das Abziehelement 39 mit Kraftaufwand die entsicherten Kettenpolster 8b in Abziehrichtung von der Gleiskette 2 herunter schieben kann. Für den Abziehvorgang liegt eine mit dem Kolben 34 verbundene Kolbenstage am Grundkörper 9b, der in Fig. 2a dargestellt ist, also an einem festen Abschnitt, der Gleiskette 2 an. Aufgrund einer hydraulischen Kraft bewegt sich der mit dem Hydraulikzylinder 33 verbundene Werkzeugschlitten 38 mitsamt dem Abziehelement 39 derart in Richtung der Kolbensstange, dass der horizontale Abstand zwischen der Kolbenstange und dem Abziehelement 39 verringert wird. Der horizontale Abstand ist in diesem Sinne ein Abstand, der unabhängig von dem Höhenunterschied der beiden Objekte ist. Wenn sich der horizontale Abstand verringert, so bleibt der Höhenunterschied, also der vertikale Abstand, erhalten. Da die Kolbenstange am Grundkörper 9b der Gleiskette 2 aufgrund der starken Gegenkraft des Grundkörpers 9b in horizontaler Richtung fixiert ist, bewegt sich der Werkzeugschlitten 38 mitsamt dem Abziehelement 39 in Abziehrichtung auf den Kolben 34 und die Kolbenstange zu und zieht dabei das Kettenpolster 8b von der Gleiskette 2 herunter.

Eine Darstellung des dritten Arbeitsplatzes 6.3 von der Seite ist in **Fig. 8** dargestellt. Der Werkzeugschlitten 38 ist in dieser Ausgestaltung derart in den Aufbau 32 intergriert, dass er in dieser Figur vom Aufbau überdeckt wird. Beim Abziehvorgang wirkt das Abziehelement 39, das auf der Seite des abzuziehenden Kettenpolsters 8b angeordnet ist, mit dem Kolben 34 auf der selben Seite zusammen.

Das Prinzip des Aufschiebens der Kettenpolster 8b entspricht weitestgehend dem des Abziehvorgangs. Allerdings wirkt das Aufpresselement 40, das auf der Seite des aufzupressenden Kettenpolsters 8b angeordnet ist, mit dem Kolben 34 auf der gegenüberliegenden Seite zusammen. Das Aufpresselement 40 wird derart neben einem aufzuschiebenden Kettenpolster 8b angeordnet, dass das Aufpresselement 40 bei Betätigung der Hydraulik in Richtung des betätigten, gegenüberliegenden Hydraulikzylinders 33 gezogen wird und das Kettenpolster 8b auf die Gleiskette 2 aufgepresst wird. Der gegenüberliegende Kolben 34 liegt dabei an der gegenüberliegenden Seite des in Fig. 2a dargestellten Grundkörpers 9b der Gleiskette 2 an.

In den **Figuren 9** und **10** ist der Bereich der Ketteninstandsetzungsvorrichtung 1 dargestellt, in welchem die zweite Umlenkeinrichtung 5.2 angeordnet ist. Das Besondere der zweiten Umlenkeinrichtung 5.2 ist ein Umschaltmechanismus mittels eines Schwenkarms 41, der es erlaubt zwischen zwei Modi zu wechseln. In der sogenannten "Null-Stellung", welche in Fig. 9 dargestellt ist, kann die, hier nicht dargestellte, Gleiskette 2 auf der unteren Rollenbahn 3.1 unter der zweiten Umlenkeinrichtung 5.2 hindurch geführt werden, wohingegen im sogenannten "Umlaufmodus", welcher in Fig. 10 dargestellt ist, die Gleiskette 2 von der oberen Rollenbahn 3.2 zur unteren Rollenbahn 3.1 und vice versa entlang der Gleiskettenumlaufrichtung 42 geführt werden kann. Im Umlaufmodus ist der Weg unter der zweiten Umlaufeinrichtung 5.2 durch den Schwenkarm 41 blockiert, weshalb zum Einführen einer Gleiskette 2 in die Ketteninstandsetzungsvorrichtung 1 ein Umschalten der Umlenkeinrichtung 5.2 in die Null-Stellung notwendig ist.

Der Schwenkarm 41 ist derart drehbar um eine Schwenkachse 43 gelagert, dass der Schwerpunkt des Schwenkarms in der Schwenkachse 43 angeordnet ist. Dementsprechend kann die schwere Baugruppe unter geringem Kraftaufwand mittels einer Zugfeder 44 bewegt werden. Die Zugfeder 44 ist im Modus der in Fig. 9 dargestellten "Null-Stellung", in dem die Gleiskette 2 über die untere Rollenbahn 3.1 in Einfahrrichtung 45 in die Ketteninstandsetzungsvorrichtung 1 hinein und in Ausfahrrichtung 46 aus der Ketteninstandsetzungsvorrichtung 1 heraus gefahren werden kann, entspannt. Da der Schwenkarm 41 seinen Schwerpunkt in der Schwenkachse 43 hat, klappt der Schwenkarm 41 unter dem Gewicht der von der oberen Rollenbahn 3.2 in die zweite Umlenkeinrichtung 5.2 eingeschobenen Gleiskette 2 nach unten. Im Zustand des nach unten geklappten Schwenkarms, also im Umlaufmodus, wie es in Fig. 10 dargestellt ist, ist die Zugfeder 44 in einem gespannten Zustand. Dabei entspricht die Einfahrrichtung 45 der Null-Stellung nun der Gleiskettenumlaufrichtung 42. Sobald die Gleiskette 2 ausgefahren wird und den Bereich des Schwenkarms 41 verlässt, kippt der Schwenkarm von selbst wieder zurück in die "Null-Stellung", wobei dieser Prozess von der Zugfeder 44 unterstützt wird.

Um die Gleiskette 2 von oben nach unten oder vice versa umzulenken, wird die Gleiskette 2 mittels der neben der zweiten Umlenkeinrichtung 5.2 angeordneten, dritten Antriebseinheit 4.3 befördert. An der dritten Antriebseinheit 4.3 sind Antriebsräder 11 zum Eingreifen in die Gleiskette 2 angeordnet. Zur Reduzierung der Reibung der Gleiskette 2 beim Vorgang des Übergangs der Gleiskette 2 von der oberen Rollenbahn 3.2 auf die untere Rollenbahn 3.1 und vice versa sind an der zweiten Umlenkeinrichtung 5.2 Rollen 47 angeordnet, auf denen die Gleiskette 2 analog zu den Rollen der unteren und oberen Rollenbahnen 3.1, 3.2 gleitet.

### Bezugszeichenliste

- 1: Ketteninstandsetzungsvorrichtung
- 2: Gleiskette
- 3: Beförderungseinrichtung, Rollenbahn
- 3.1: Untere Rollenbahn
- 3.2: Obere Rollenbahn
- 4: Antriebseinheit
- 4.1: Erste Antriebseinheit
- 4.2: Zweite Antriebseinheit
- 4.3: Dritte Antriebseinheit
- 5.1: Erste Umlenkeinrichtung
- 5.2: Zweite Umlenkeinrichtung
- 6: Arbeitsplatz
- 6.1: Erster Arbeitsplatz
- 6.2: Zweiter Arbeitsplatz
- 6.3: Dritter Arbeitsplatz
- 6.4: Vierter Arbeitsplatz
- 7.1: Bremse
- 7.2: Niederhalter
- 8a: Äußere Kettenverbinder
- 8.1: Seitliche Öffnungen
- 8.2: Obere Durchgangsöffnung
- 8b: Kettenpolster
- 8c: Innere Kettenverbinder
- 9a: Aufnahmebolzen
- 9b: Grundkörper
- 10: Ritzeltrommel
- 11: Äußeres Antriebsrad
- 12: Inneres Antriebsrad
- 13: Vertikalträger
- 14: Horizontalträger
- 15: Rahmen der Antriebseinheit
- 16: Abstandsblech
- 17: Gewindestange
- 18: Handrad
- 19: Trittbrett
- 20: Getriebemotor
- 21: Kettenrad
- 22: Rollenkette
- 23: Abziehwerkzeug
- 24: Werkzeugschlitten
- 25: Hydraulikzylinder
- 26: Abziehbolzen
- 27: Schubbolzen
- 28: Platte
- 29: Aussparung
- 30: Einpressadapter
- 31: Rahmen
- 32: Aufbau
- 33: Hydraulikzylinder
- 34: Kolben, Gegenstück
- 35: Werkzeughalteblech
- 36: Bolzenhalteblech
- 37: Positionshalter
- 38: Werkzeugschlitten
- 39: Abziehelement
- 40: Aufpresselement
- 41: Schwenkarm
- 42: Gleiskettenumlaufrichtung
- 43: Schwenkachse
- 44: Zugfeder
- 45: Einfahrrichtung
- 46: Ausfahrrichtung
- 47: Rolle

## Patentansprüche

1. Ketteninstandsetzungsvorrichtung (1) zur Bearbeitung von Gleisketten (2), umfassend
- eine passive obere Rollenbahn (3.2) und eine darunter angeordnete passive untere Rollenbahn (3.1),
- eine erste Umlenkeinrichtung (5.1) zur Umlenkung der Gleiskette (2) von der unteren Rollenbahn (3.1) auf die obere Rollenbahn (3.2) und umgekehrt mit zugeordneter Antriebseinheit (4.2),
- eine zweite Umlenkeinrichtung (5.2) zur Umlenkung der Gleiskette (2) von der oberen Rollenbahn (3.2) auf die untere Rollenbahn (3.1) und umgekehrt mit zugeordneter Antriebseinheit (4.3),
- wobei die obere und die untere Rollenbahn (3.2, 3.1) mit den Umlenkeinrichtungen (5.1, 5.2) einen Gleiskettenbeförderungskreislauf bildend ausgeführt sind und dass
- wenigstens ein Arbeitsplatz (6.2) zur Montage und Demontage von Bestandteilen der Gleiskette (2) innerhalb des Gleiskettenbeförderungskreislaufs angeordnet ist.
**dadurch gekennzeichnet, dass**
ein die untere Rollenbahn (3.1) erweiternder Aufgabe- und Abgabebereich für die Gleiskette (2) mit einer zugeordneten Antriebseinheit (4.1) in die Ketteninstandsetzungsvorrichtung integriert ist.

2. Ketteninstandsetzungsvorrichtung (1) nach Anspruch 1, **dadurch gekennzeichnet, dass** die aktive Antriebseinheit (4.1, 4.2, 4.3) aus einer Ritzeltrommel (10) mit darauf angeordneten Antriebsrädern (11, 12) ausgebildet ist.

3. Ketteninstandsetzungsvorrichtung (1) nach Anspruch 2, **dadurch gekennzeichnet, dass** innerhalb der aktiven Antriebseinheit (4.1, 4.2, 4.3) auf der Ritzeltrommel (10) jeweils zwei identische Antriebsräder (11) beabstandet angeordnet sind, welche derart in die Gleiskette (2) eingreifbar ausgebildet sind, dass bei einem Eingriff der Antriebsräder (11) in die Gleiskette (2) eine Rotation der Antriebsräder (11) ein Verschieben der Gleiskette (2) bewirkt.

4. Ketteninstandsetzungsvorrichtung (1) nach einem der Ansprüche 2 oder 3, **dadurch gekennzeichnet, dass** auf der Antriebseinheit (4.1, 4.2, 4.3) mehrere unterschiedlich große Paare von Antriebsrädern (11, 12) symmetrisch zur Mitte der Ritzeltrommel (10), voneinander beabstandet auf der Ritzeltrommel angeordnet sind, wobei der Durchmesser der Antriebsräder (11, 12) von innen nach außen zunimmt.

5. Ketteninstandsetzungsvorrichtung (1) nach einem der Ansprüche 2 bis 4, **dadurch gekennzeichnet, dass** die Ritzeltrommeln (10) der Antriebseinheiten (4.1, 4.2, 4.3) zur Anpassung an unterschiedliche Gleiskettentypen höhenverstellbar ausgebildet ist.

6. Ketteninstandsetzungsvorrichtung (1) nach einem der Ansprüche 2 bis 5 **dadurch gekennzeichnet, dass** die Ritzeltrommeln (10) der den Umlenkeinrichtungen (5.1, 5.2) zugeordneten Antriebseinheiten (4.2, 4.3) derart höhenverstellbar ausgebildet sind, dass die auf der Ritzeltrommel (10) angeordneten Antriebsräder (11, 12) in einer oberen Position in die auf der oberen Rollenbahn (3.2) positionierte Gleiskette (2) und in einer unteren Position in die auf der unteren Rollenbahn (3.1) positionierte Gleiskette (2) eingreifen.

7. Ketteninstandsetzungsvorrichtung (1) nach einem der Ansprüche 2 bis 6, **dadurch gekennzeichnet, dass** die Antriebsräder (11, 12) der Antriebseinheiten (4.1, 4.2, 4.3) in zwei entgegengesetzte Richtungen rotierbar ausgebildet sind.

8. Ketteninstandsetzungsvorrichtung (1) nach einem der Ansprüche 1 bis 7, **dadurch gekennzeichnet, dass** an einem Arbeitsplatz (6.2) ein motorbetriebenes Abziehwerkzeug (23) zum Abziehen der äußeren Kettenverbinder (8a) von der Gleiskette (2) und zum erneuten Aufschieben der äußeren Kettenverbinder (8a) auf die Gleiskette (2) angeordnet ist.

9. Ketteninstandsetzungsvorrichtung (1) nach Anspruch 8, **dadurch gekennzeichnet, dass** das motorbetriebene Abziehwerkzeug (23) einen Werkzeugschlitten (24) mit zwei parallelen, an dem Werkzeugschlitten (24) angeordneten, horizontal in Abziehrichtung ausgerichteten, stabförmigen Schubbolzen (27) sowie einen an dem Werkzeugschlitten (24) befestigbaren, vertikal ausgerichteten, stabförmigen Abziehbolzen (26) aufweist, wobei die Schubbolzen (27) über einen Motor derart kraftübertragend mit dem Werkzeugschlitten (24) verbunden sind, dass sich die Schubbolzen (27) aufgrund der Arbeit des Motors in axialer Richtung bewegen und sich der horizontale Abstand zwischen den zwei Schubbolzen (27) und dem Abziehbolzen (26) dadurch verringert.

10. Ketteninstandsetzungsvorrichtung (1) nach einem der Ansprüche 1 bis 9, **dadurch gekennzeichnet, dass** an einem Arbeitsplatz (6.3) ein vertikal ausgerichtetes Abziehelement (39) zum Abziehen der Kettenpolster (8b) angeordnet ist, wobei das Abziehelement (39) derart kraftübertragend mit einem horizontal in der Richtung des Abziehvorgangs ausgerichteten, stabförmigen Gegenstück (34) verbunden ist, dass der horizontale Abstand zwischen dem Abziehelement (39) und dem Gegenstück (34) durch die Arbeit eines Motors reduzierbar ist.

11. Ketteninstandsetzungsvorrichtung (1) nach einem der Ansprüche 1 bis 10, **dadurch gekennzeichnet, dass** an einem Arbeitsplatz (6.3) ein vertikal ausgerichtetes Aufpresselement (40) zum Aufpressen der Kettenpolster (8b) angeordnet ist, wobei das Aufpresselement (40) derart kraftübertragend mit einem horizontal, entgegen der Richtung des Abziehvorganges ausgerichteten, stabförmigen Gegenstück (34) verbunden ist, dass der Abstand zwischen dem Aufpresselement (40) und dem Gegenstück (34) durch die Arbeit eines Motors reduzierbar ist.

12. Ketteninstandsetzungsvorrichtung (1) nach Anspruch 10, **dadurch gekennzeichnet, dass** der Motor ein Hydraulikmotor ist und das Gegenstück (34) ein Kolben (34) ist, wobei das Abziehelement (39) derart starr mit einem mit dem Kolben (34) zusammenwirkenden Hydraulikzylinder (33) verbunden ist, dass eine Bewegung des Hydraulikzylinders (33) in Bezug auf den Kolben (34) aufgrund der in dem Hydraulikzylinder (33) hydraulisch erzeugten Kraft eine Bewegung des Abziehelementes (39) in Richtung des Kolbens (34) verursacht.

13. Ketteninstandsetzungsvorrichtung (1) nach Anspruch 11, **dadurch gekennzeichnet, dass** der Motor ein Hydraulikmotor ist und das Gegenstück (34) ein Kolben (34) ist, wobei das Aufpresselement (40) derart starr mit einem mit dem Kolben (34) zusammenwirkenden Hydraulikzylinder (33) verbunden ist, dass eine Bewegung des Hydraulikzylinders (33) aufgrund der in dem Hydraulikzylinder (33) hydraulisch erzeugten Kraft eine Bewegung des Aufpresselementes (40) in Richtung des Kolbens (34) verursacht.

14. Ketteninstandsetzungsvorrichtung (1) nach einem der Ansprüche 1 bis 13, **dadurch gekennzeichnet, dass** die zweite Umlenkeinrichtung (5.2) einen Schwenkarm (41) aufweist, dessen Schwerpunkt derart ausbalanciert ist, dass der Schwenkarm (41) durch das Gewicht der Gleiskette (2) zum Wechsel zwischen einer Null-Stellung und einer Umlauf-Stellung reversibel selbsttätig klappbar ausgebildet ist.

15. Ketteninstandsetzungsvorrichtung (1) nach Anspruch 14, **dadurch gekennzeichnet, dass** der Klappmechanismus des Schwenkarms (41) aus der Umlauf-Stellung wieder in die Null-Stellung zurück mittels der Federkraft einer am Schwenkarm (41) befestigten Zugfeder (44) unterstützt wird.

## Claims

1. A track servicing apparatus (1) for the processing of crawler tracks (2), comprising
- a passive upper roller way (3.2) and a passive lower roller way (3.1) arranged below,
- a first deflecting device (5.1) for the deflection of the crawler track (2) from the lower roller way (3.1) to the upper roller way (3.2) and vice versa with an associated drive unit (4.2),
- a second deflecting device (5.2) for the deflection of the crawler track (2) from the upper roller way (3.2) to the lower roller way (3.1) and vice versa with an associated drive unit (4.3),
- wherein the upper and the lower roller way (3.2, 3.1) are designed such that they form a crawler track conveyance circuit together with the deflecting devices (5.1, 5.2), and that
- at least one workplace (6.2) for the assembly and disassembly of components of the crawler track (2) is arranged within the crawler track conveyance circuit,
**characterized in that**
a loading and discharge area extending the lower roller way (3.1) for the crawler track (2) with an associated drive unit (4.1) is integrated into the track servicing apparatus.

2. The track servicing apparatus (1) according to claim 1, **characterized in that** the active drive unit (4.1, 4.2, 4.3) is designed from a pinion drum (10) with drive wheels (11, 12) arranged thereon.

3. The track servicing apparatus (1) according to claim 2, **characterized in that** two identical drive wheels (11) each are arranged within the active drive unit (4.1, 4.2, 4.3) on the pinion drum (10) in a spaced apart manner and are designed such that they are engageable with the crawler track (2) such that a rotation of the drive wheels (11) causes a displacement of the crawler track (2) when the drive wheels (11) engage the crawler track (2).

4. The track servicing apparatus (1) according to one of claims 2 or 3, **characterized in that** several differently sized pairs of drive wheels (11, 12) are arranged on the drive unit (4.1, 4.2, 4.3) symmetrically to the center of the pinion drum (10), spaced apart from each other on the pinion drum, wherein the diameter of the drive wheels (11, 12) increases from the inside to the outside.

5. The track servicing apparatus (1) according to one of claims 2 to 4, **characterized in that** the pinion drums (10) of the drive units (4.1, 4.2, 4.3) are designed such that their height can be adapted to different types of crawler tracks.

6. The track servicing apparatus (1) according to one of claims 2 to 5, **characterized in that** the pinion drums (10) of the drive units (4.2, 4.3) associated with the deflecting devices (5.1, 5.2) are designed such that their height can be adapted such that the drive wheels (11, 12) arranged on the pinion drum (10) engage the crawler track (2) positioned on the upper roller way (3.2) in an upper position and the crawler track (2) positioned on the lower roller way (3.1) in a lower position.

7. The track servicing apparatus (1) according to one of claims 2 to 6, **characterized in that** the drive wheels (11, 12) of the drive units (4.1, 4.2, 4.3) are designed such that they can rotate in two opposite directions.

8. The track servicing apparatus (1) according to one of claims 1 to 7, **characterized in that** a motor driven scraping tool (23) for scraping the outer track connector (8a) off the crawler track (2) and for the renewed sliding of the outer track connector (8a) onto the crawler track (2) is arranged at a workplace (6.2).

9. The track servicing apparatus (1) according to claim 8, **characterized in that** the motor driven scraping tool (23) has a tool slide (24) with two parallel rod-shaped sliding bolts (27) arranged on the tool slide (24) and horizontally oriented in the scraping direction as well as a vertically oriented, rod-shaped scraping bolt (26) which is fixable on the tool slide (24), wherein the sliding bolts (27) are connected to the tool slide (24) via a motor in a force-transmitting manner such that the sliding bolts (27) move in an axial direction due to the work of the motor, thereby decreasing the horizontal distance between the two sliding bolts (27) and the scraping bolt (26).

10. The track servicing apparatus (1) according to one of claims 1 to 9, **characterized in that** a vertically oriented scraping element (39) for scraping the track cushions (8b) is arranged at a workplace (6.3), wherein the scraping element (39) is connected to a rod-shaped counterpart (34) horizontally oriented in the direction of the scraping action in a force-transmitting manner such that the horizontal distance between the scraping element (39) and the counterpart (34) can be reduced by the work of a motor.

11. The track servicing apparatus (1) according to one of claims 1 to 10, **characterized in that** a vertically oriented pressing element (40) for pressing on the track cushions (8b) is arranged at a workplace (6.3), wherein the pressing element (40) is connected to a rod-shaped counterpart (34) horizontally oriented opposite to the direction of the scraping action in a force-transmitting manner such that the distance between the pressing element (40) and the counterpart (34) can be reduced by the work of a motor.

12. The track servicing apparatus (1) according to claim 10, **characterized in that** the motor is a hydraulic motor and the counterpart (34) is a piston (34), wherein the scraping element (39) is connected to a hydraulic cylinder (33) cooperating with the piston (34) in a rigid manner such that a movement of the hydraulic cylinder (33) with regard to the piston (34) causes a movement of the scraping element (39) in the direction of the piston (34) due to the hydraulically generated force in the hydraulic cylinder (33).

13. The track servicing apparatus (1) according to claim 11, **characterized in that** the motor is a hydraulic motor and the counterpart (34) is a piston (34), wherein the pressing element (40) is connected to a hydraulic cylinder (33) cooperating with the piston (34) in a rigid manner such that a movement of the hydraulic cylinder (33) causes a movement of the pressing element (40) in the direction of the piston (34) due to the hydraulically generated force in the hydraulic cylinder (33).

14. The track servicing apparatus (1) according to one of claims 1 to 13, **characterized in that** the second deflecting device (5.2) has a pivot arm (41) whose center of gravity is balanced such that the pivot arm (41) is designed for switching between a zero position and a circumferential position in a reversible and automatically foldable manner by the weight of the crawler track (2).

15. The track servicing apparatus (1) according to claim 14, **characterized in that** the folding mechanism of the pivot arm (41) from the circumferential position back to the zero position is supported by means of the spring force of a tension spring (44) fixed on the pivot arm (41).

## Revendications

1. Dispositif de remise en état de chaînes (1) pour l'usinage de chenilles (2), comprenant
- un transporteur à rouleaux supérieur passif (3.2) et un transporteur à rouleaux inférieur passif (3.1) disposé en dessous de lui,
- un premier dispositif de renvoi (5.1) pour le renvoi de la chenille (2) du transporteur à rouleaux inférieur (3.1) au transporteur à rouleaux supérieur (3.2) et inversement avec module d'entraînement associé (4.2),
- un second dispositif de renvoi (5.2) pour le renvoi de la chenille (2) du transporteur à rouleaux supérieur (3.2) au transporteur à rouleaux inférieur (3.1) et inversement avec module d'entraînement associé (4.3),
- dans lequel les transporteurs à rouleaux supérieur et inférieur (3.2, 3.1) sont réalisés en formant un circuit d'acheminement de chenilles avec les dispositifs de renvoi (5.1, 5.2) et que
- au moins un poste de travail (6.2) pour le montage et démontage de constituants de la chenille (2) est disposé au sein du circuit d'acheminement de chenilles,
**caractérisé en ce que**
une région d'alimentation et de jetée élargissant le transporteur à rouleaux inférieur (3.1) pour la chenille (2) avec un module d'entraînement associé (4.1) est intégrée dans le dispositif de remise en état de chaînes.

2. Dispositif de remise en état de chaînes (1) selon la revendication 1, **caractérisé en ce que** le module d'entraînement actif (4.1, 4.2, 4.3) est réalisé à partir d'un tambour à pignon (10) avec des roues d'entraînement (11, 12) disposées sur lui.

3. Dispositif de remise en état de chaînes (1) selon la revendication 2, **caractérisé en ce que** deux roues d'entraînement identiques (11) sont à chaque fois disposées de manière écartée au sein du module d'entraînement actif (4.1, 4.2, 4.3) sur le tambour à pignon (10), lesquelles sont réalisées de manière à pouvoir être engrenées dans la chenille (2) de telle sorte que lors d'un engrènement des roues d'entraînement (11) dans la chenille (2), une rotation des roues d'entraînement (11) entraîne un coulissement de la chenille (2).

4. Dispositif de remise en état de chaînes (1) selon une des revendications 2 ou 3, **caractérisé en ce que** sur le module d'entraînement (4.1, 4.2, 4.3), plusieurs paires de roues d'entraînement (11, 12) de taille différente sont disposées sur le tambour à pignon de manière écartée l'une de l'autre, symétriquement par rapport au milieu du tambour à pignon (10), dans lequel le diamètre des roues d'entraînement (11, 12) croît de l'intérieur vers l'extérieur.

5. Dispositif de remise en état de chaînes (1) selon une des revendications 2 à 4, **caractérisé en ce que** les tambours à pignon (10) des modules d'entraînement (4.1, 4.2, 4.3) sont réalisés de manière réglable en hauteur pour l'adaptation à différents types de chenilles.

6. Dispositif de remise en état de chaînes (1) selon une des revendications 2 à 5, **caractérisé en ce que** les tambours à pignon (10) des modules d'entraînement (4.2, 4.3) associés aux dispositifs de renvoi (5.1, 5.2) sont réalisés de manière réglable en hauteur de telle sorte que les roues d'entraînement (11, 12) disposées sur le tambour à pignon (10) s'engrènent dans une position supérieure dans la chenille (2) positionnée sur le transporteur à rouleaux supérieur (3.2) et dans une position inférieure dans la chenille (2) positionnée sur le transporteur à rouleaux inférieur (3.1).

7. Dispositif de remise en état de chaînes (1) selon une des revendications 2 à 6, **caractérisé en ce que** les roues d'entraînement (11, 12) des modules d'entraînement (4.1, 4.2, 4.3) sont réalisées de manière rotative dans deux directions opposées.

8. Dispositif de remise en état de chaînes (1) selon une des revendications 1 à 7, **caractérisé en ce qu'un** outil de retrait motorisé (23) pour le retrait des connecteurs de chaîne extérieurs (8a) de la chenille (2) et pour le nouvel enfilement des connecteurs de chaîne extérieurs (8a) sur la chenille (2) est disposé à un poste de travail (6.2).

9. Dispositif de remise en état de chaînes (1) selon la revendication 8, **caractérisé en ce que** l'outil de retrait motorisé (23) présente un chariot porte-outil (24) avec deux boulons de poussée parallèles (27) en forme de barre, disposés sur le chariot porte-outil (24), orientés horizontalement dans la direction de retrait ainsi qu'un boulon de retrait (26) en forme de barre, pouvant être fixé au chariot porte-outil (24), orienté verticalement, dans lequel les boulons de poussée (27) sont connectés par le biais d'un moteur au chariot porte-outil (24) avec transmission de force de telle sorte que les boulons de poussée (27) se déplacent en direction axiale en raison du travail du moteur et l'écart horizontal entre les deux boulons de poussée (27) et le boulon de retrait (26) se réduit de ce fait.

10. Dispositif de remise en état de chaînes (1) selon une des revendications 1 à 9, **caractérisé en ce qu'un** élément de retrait orienté verticalement (39) pour le retrait des rembourrages de chaîne (8b) est disposé à un poste de travail (6.3), dans lequel l'élément de retrait (39) est connecté à un pendant (34) en forme de barre, orienté horizontalement dans la direction du processus de retrait avec transmission de force de telle sorte que l'écart horizontal entre l'élément de retrait (39) et le pendant (34) peut être réduit par le travail d'un moteur.

11. Dispositif de remise en état de chaînes (1) selon une des revendications 1 à 10, **caractérisé en ce qu'un** élément d'engagement par pression (40) orienté verticalement pour l'engagement par pression des rembourrages de chaîne (8b) est disposé à un poste de travail (6.3), dans lequel l'élément d'engagement par pression (40) est connecté à un pendant (34) en forme de barre, orienté horizontalement, à l'encontre de la direction du processus de retrait avec transmission de force de telle sorte que l'écart entre l'élément d'engagement par pression (40) et le pendant (34) peut être réduit par le travail d'un moteur.

12. Dispositif de remise en état de chaînes (1) selon la revendication 10, **caractérisé en ce que** le moteur est un moteur hydraulique et le pendant (34) est un piston (34), dans lequel l'élément de retrait (39) est connecté de manière rigide à un cylindre hydraulique (33) coopérant avec le piston (34) de telle sorte qu'un déplacement du cylindre hydraulique (33) par rapport au piston (34) provoque en raison de la force générée par voie hydraulique dans le cylindre hydraulique (33) un déplacement de l'élément de retrait (39) en direction du piston (34).

13. Dispositif de remise en état de chaînes (1) selon la revendication 11, **caractérisé en ce que** le moteur est un moteur hydraulique et le pendant (34) est un piston (34), dans lequel l'élément d'engagement par pression (40) est connecté de manière rigide à un cylindre hydraulique (33) coopérant avec le piston (34) de telle sorte qu'un déplacement du cylindre hydraulique (33) provoque en raison de la force générée par voie hydraulique dans le cylindre hydraulique (33) un déplacement de l'élément d'engagement par pression (40) en direction du piston (34).

14. Dispositif de remise en état de chaînes (1) selon une des revendications 1 à 13, **caractérisé en ce que** le second dispositif de renvoi (5.2) présente un bras pivotant (41) dont le centre de gravité peut être équilibré de telle sorte que le bras pivotant (41) est réalisé de manière à pouvoir être rabattu automatiquement de manière réversible par le poids de la chenille (2) pour le changement entre une position neutre et une position de rotation.

15. Dispositif de remise en état de chaînes (1) selon la revendication 14, **caractérisé en ce que** le mécanisme de rabattement du bras pivotant (41) de la position de rotation de retour à la position neutre est assisté au moyen de la résilience d'un ressort de traction (44) fixé au bras pivotant (41).
